# EUROPEAN PATENT APPLICATION

(11) **EP 3 185 546 A1**
(43) Date of publication of application: **28.06.2017**
(21) Application number: 16207416.5
(22) Date of filing: 15.12.2006
(51) Int. Cl.: H04N 7/16, H04N 5/00, H04N 21/25, H04N 21/436, H04N 21/45, H04N 21/454, H04N 21/466, H04N 21/482

(54) **SYSTEMS AND METHODS FOR MANAGING CONTENT**

(30) Priority: 29.12.2005 US 324212 P; 29.12.2005 US 324172 P; 29.12.2005 US 324204 P; 29.12.2005 US 324185 P; 29.12.2005 US 324173 P
(62) Divisional of application: 11151835.3
(71) Applicant: Rovi Guides, Inc., San Carlos, CA 94070 (US)
(72) Inventor: CORDRAY, Charles, New York, New York 10012 (US); WALKER, Todd A., Berwyn, Pennsylvania 19312 (US); ARMALY, Samir B., La Canada, California 91011 (US)
(74) Representative: Pisani, Diana Jean

(57) **Abstract**

A "New to Me" feature is provided for an interactive media guidance system implemented as a home network having multiple user equipment devices. Functionally speaking, the "New to Me" feature of the interactive media guidance system identifies programs or advertisements that have been previously viewed by an individual user or a user equipment device within the home network, or even by a household. The interactive media guidance system may use the information gathered regarding the programs and/or advertisements that have already been seen by a user, device or household to, for example, remove the programs or advertisements from future displays of recommendations, search results or listings of available programming.

## Description

### Background of the Invention

The present invention relates to systems and methods for managing content. More particularly, the present invention relates to generating interactive content presented to users based on programming viewed or played on user equipment devices that are networked together.

User equipment devices today may have the ability to, for example, take into account the content that a user has seen before when presenting interactive information to the user, or when performing an operation such as recording television programming at the user's direction. Such user equipment devices are aimed at being customizable to a particular user. However, with the advent of localized networks of user equipment devices, such as a home network of interconnected user equipment devices, users have a tendency to view media on many if not all of the user equipment devices in a given network on a regular basis. Beyond that, as user equipment devices become increasingly prevalent, users have a greater tendency to view media on user equipment devices that are outside of a home network, and yet that still may be connected to the overarching network to which user equipment devices in the home network are connected. It would therefore be desirable to provide a system for allowing network-connected user equipment devices to be customized to users based on users' viewing histories.

Furthermore, the ability of known systems to identify previously viewed content, and then make use of such information, is limited both in terms of breadth of functionality with which this information is utilized, and the depth of information concerning previously viewed content that is generated. For example, current television program guides provide features that include, among others, "Repeats", "First Run" and "Season Pass". The "Repeats" feature identifies a particular program that has been previously broadcast, regardless of whether or not that program has actually been watched by a specific viewer. The "First Run" feature identifies programming that is being broadcast or run for the very first time. The "Season Pass" feature, meanwhile, allows users to purchase an entire upcoming season of a program. Other features of such guides include recommendations, searches, and other interactive displays of content including programming, advertisements or other media. All of these features, however, currently do not enable users to view in a detailed manner, if at all, the extent to which the identified programs have been previously viewed. It would be desirable to provide users with such information in order to better help users identify the programming in which they have the most interest. Also, even those program guides that are presently capable of identifying previously viewed content provide little detail about the viewing history of such content, in addition to lacking sophisticated ways of representing such content. It would be desirable, therefore, to provide a system that is capable of providing a greater level of sophistication in connection with the viewing history and displays of previously viewed content.

### Summary of the Invention

The present invention addresses the above and other problems by providing systems and methods for managing the display of interactive content based on a viewing history for an individual, a device, or a home network. By managing content based on a viewing history for an individual, a device, or a home network, the present invention may efficiently accommodate the viewing habits of one or more users interacting with one or more user devices that are communicatively coupled to a home network, or are interacting with two or more home networks that are communicatively coupled to each other.

The viewing history may include compilation of content that has been displayed,'viewed, or played on at least one user device that is communicatively coupled to a home network. In addition, a viewing history may be created, modified, and updated for a particular user, a particular user device, or a home network. The viewing history may provide a framework or guideline for enabling an interactive media guidance application to generate interactive content. Interactive content may be content that is displayed by a interactive media guidance application such as, for example, listings of programming, advertisements, and information screens.

An advantage of the present invention is that the interactive content may be customized based on the viewing history. For example, the interactive media guidance system may display a list of programming that has not been viewed according to the viewing history. As another example, the interactive media guidance application may display advertisements that have not been viewed according to the viewing history.

Content management at an individual level within a home network may enable a media guidance application to provide interactive content that is specific to each user regardless of which user device the user uses. For example, when a first user views a particular program (e.g., a television show) in the living room, the viewing history for the first user may be updated to reflect the fact that the first user has viewed that particular program. Thereafter, when the first user retires to the bedroom (or any other room having a user device communicatively coupled to the home network), and decides to watch another program, the system may omit the listing of the particular program that the first user viewed in the living room from a listing of programs that may be displayed on a user device in the bedroom. In contrast, if a second user accesses the user device in either the living room or the bedroom and has not viewed the particular program viewed by the first user, the system may display the particular program in a listing for the second user.

Content management at a user device level within a home network may enable a media guidance application to provide interactive content that is based on the content viewed at a selected user device. For example, a selected user device may be treated as the master and the other user devices may be treated as slaves. In a master/slave arrangement, the viewing history may be created, modified, or updated based on the content viewed at the master user device. Thus, the interactive content generated for display on both the master and slave devices is based on the viewing history of the master user device.

Content management at a home network level may enable a media guidance application to provide interactive content that is based on the content viewed at any one of several user devices communicatively coupled to a home network. In this arrangement, whenever an item of programming is viewed on a user device that is communicatively coupled to the home network, that program may not be presented in a listing of programming on that particular user device, nor any other user device that is communicatively coupled to the home network. For example, assume that a home network is communicatively coupled to three different user devices. If "Superman" is viewed on a first user device, a viewing history for the home network may be updated to reflect this viewing event. Thus, none of the user devices may display "Superman" in a listing of programming. If "Wonderwoman" is viewed on a second user device, the viewing history for the home network may be updated to reflect this viewing event. Again, none of the user devices may display "Wonderwoman" in a listing of programming.

Managing content across two or more home networks may enable the media guidance application to provide interactive content that is based on the content viewed at a selected home network. For example, a user may have a first home network (e.g., located at his or her house) and a second home network (e.g., located at his or her vacation house). In one embodiment, which assumes that the first home network is the selected home network, any item of programming that is viewed at the first home network may not be presented in a listing of programming at the second network.

### Brief Description of the Drawings

FIG. 1 is a diagram of an illustrative interactive television system in accordance with the present invention.
FIG. 2 is a diagram of illustrative user television equipment in accordance with the present invention.
FIG. 3 is a diagram of additional illustrative user television equipment in accordance with the present invention.
FIG. 4 is a diagram of an illustrative remote control in accordance with the present invention.
FIG. 5 is a diagram of illustrative user computer equipment in accordance with the present invention.
FIG. 6 is a generalized diagram of illustrative user equipment in accordance with the present invention.
FIG. 7 is a diagram of an illustrative home network in which a plurality of user equipment is implemented in a star configuration in accordance with the present invention.
FIG. 8a is a diagram of an illustrative home network in which a plurality of user equipment is implemented in a tree configuration in accordance with the present invention.
FIG. 8b is a diagram of an illustrative home network in which a plurality of user equipment is implemented in a ring configuration in accordance with the present invention.
FIG. 8c is a diagram of an illustrative home network in which a plurality of user equipment is implemented in a bus configuration in accordance with the present invention.
FIG. 9 is a diagram of an illustrative home network in which a plurality of user equipment and a server are implemented in a client-server configuration in accordance with the present invention.
FIG. 10 is a diagram of an illustrative home network in a client-server configuration and in which the set-top-box acts as the server in accordance with the present invention.
FIG. 11a is a diagram of a plurality of home networks implemented in an illustrative neighborhood node configuration in accordance with the present invention.
FIG. 11b is a diagram of an illustrative system in which servers are located at network nodes in accordance with the present invention.
FIG. 11c is a diagram of two illustrative home networks that have been interconnected in accordance with the present invention.
FIG. 11d is a diagram of two illustrative home networks that have been interconnected via a server in accordance with the present invention.
FIG. 12 shows several different types of content that may be monitored for creating, modifying, or updating a viewing history in accordance with the present invention.
FIG. 13 shows several monitors that may be used to track various aspects of the viewed or played content in accordance with the present invention.
FIG. 14 shows an illustrative display screen for allowing a user to manually enter previously viewed content in accordance with the present invention.
FIG. 15 shows an illustrative flow diagram in connection with allowing a user to manually enter previously viewed content in accordance with the present invention.
FIG. 16 is a diagram of an illustrative home network in which a plurality of user equipment devices are coupled to a local database server in accordance with the present invention.
FIG. 17 shows several different types of interactive content that may be generated and displayed by an interactive media guidance application in accordance with the present invention.
FIG. 18a shows an illustrative flow diagram for displaying media content based on the viewing history of a user in a home network in accordance with the present invention.
FIG. 18b shows an illustrative flow diagram for updating a viewing history for several identified users in accordance with the present invention.
FIG. 18c shows an illustrative flow diagram for generating interactive contented based on a viewing history of a selected user devices in accordance with the present invention.
FIG. 18d shows an illustrative flow diagram for generating interactive content based on a viewing history of a home network in accordance with the present invention.
FIG. 18e shows an illustrative flow diagram for generating interactive content based on a selected one of at least two home networks in accordance with the present invention.
FIG. 19 shows an illustrative display screen for selecting a user profile at a user equipment device in a home network in accordance with the present invention.
FIG. 20 shows an illustrative flow diagram for displaying interactive content or media content based on a ranking process that is applied to previously viewed media content in accordance with the present invention.
FIG. 21a shows an illustrative display screen for displaying previously viewed content in accordance with the present invention.
FIG. 21b shows another illustrative display screen for displaying previously viewed content in accordance with the present invention.
FIG. 21c shows yet another illustrative display screen for displaying previously viewed content in accordance with the present invention.
FIG. 21d shows yet another illustrative display screen for displaying previously viewed content in accordance with the present invention.
FIG. 21e shows yet another illustrative display screen for displaying previously viewed content in accordance with the present invention.
FIG. 21f shows yet another illustrative display screen for displaying previously viewed content in accordance with the present invention.
FIG. 21g shows yet another illustrative display screen for displaying previously viewed content in accordance with the present invention.
FIG. 21h shows yet another illustrative display screen for displaying previously viewed content in accordance with the present invention.
FIG. 22 shows an illustrative display screen for allowing a user to enable, disable or modify settings relating to the feature of tracking previously viewed content in accordance with the present invention.

### Detailed Description of the Preferred Embodiments

The amount of media available to users in any given media delivery system can be substantial. Consequently, many users desire a form of media guidance, an interface that allows users to efficiently navigate media selections and easily identify media that they may desire. An application which provides such guidance is referred to herein as an interactive media guidance application or, sometimes, a guidance application.

Interactive media guidance applications may take various forms depending on the media for which they provide guidance. One typical type of media guidance application is an interactive television program guide. Interactive television program guides are well-known guidance applications that, among other things, allow users to navigate among and locate television programming viewing choices and, in some systems, digital music choices. The television programming (and music programming) may be provided via traditional broadcast, cable, satellite, Internet, or any other means. The programming may be provided on a subscription basis (sometimes referred to as premium programming), as pay-per-view programs, or on-demand such as in video-on-demand (VOD) systems.

With the advent of the Internet, mobile computing, and high-speed wireless networks, users are able to access media on personal computers (PCs) and devices on which they traditionally could not. Non-television-centric platforms (i.e., platforms that distribute media with equipment not part of the user's broadcast, cable or satellite television-delivery network) allow users to navigate among and locate desirable video clips, full motion videos (which may include television programs), images, music files, and other suitable media. Consequently, media guidance is also necessary on modern non-television-centric platforms. For example, media guidance applications may be provided as on-line applications (i.e., provided on a web-site), or as stand-alone applications or clients on hand-held computers, personal digital assistants (PDAs) or cellular telephones. In some systems, users may control equipment remotely via a media guidance application. For example, users may access an online media guide and set recordings or other settings on their in home equipment. This may be accomplished by the on-line guide controlling the user's equipment directly or via another media guide that runs on the user's equipment. Remote access of interactive media guidance applications is discussed in greater detail in U.S. Patent Application No. 11/246,392, filed October 7, 2005, which is hereby incorporated by reference herein in its entirety.

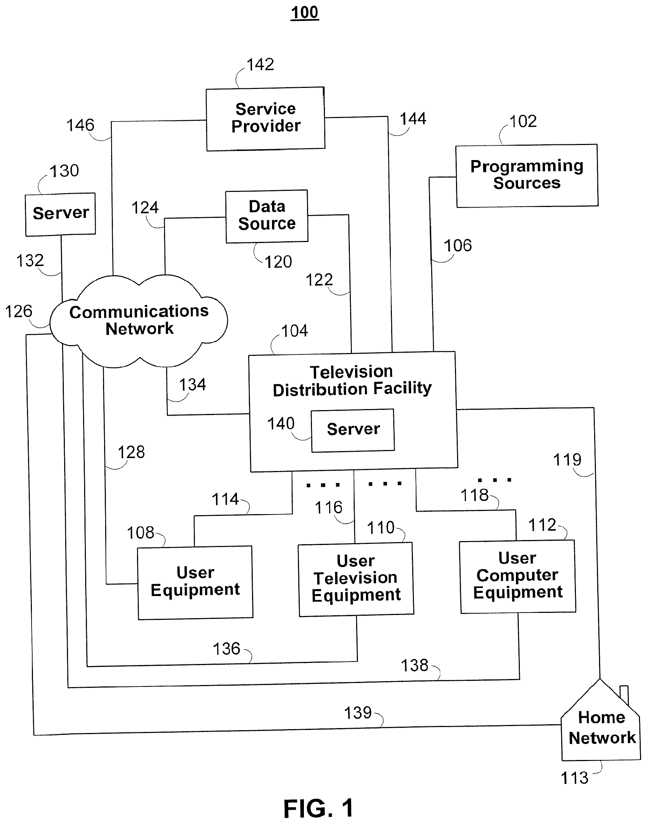

An illustrative interactive media guidance system 100 in accordance with the present invention is shown in FIG. 1. System 100 is intended to illustrate a number of approaches by which media of various types, and guidance for such media, may be provided to (and accessed by) end-users. The present invention, however, may be applied in systems employing any one or a subset of these approaches, or in systems employing other approaches for delivering media and providing media guidance.

The first approach represents a typical television-centric system in which users may access television (and in some systems music) programming. This includes programming sources 102 and distribution facility 104. Media such as television programming and digital music is provided from programming sources 102 to distribution facility 104, using communications path 106. Communications path 106 may be a satellite path, a fiber-optic path, a cable path, or any other suitable wired or wireless communications path or combination of such paths.

Programming sources 102 may be any suitable sources of television and music programming, such as television broadcasters (e.g., NBC, ABC, and HBO) or other television or music production studios. Programming sources 102 may provide television programming in a variety of formats in high definition and standard definition, such as, for example, 1080p, 1080i, 720p, 480p, 480i, and any other suitable format.

Distribution facility 104 may be a cable system headend, a satellite television distribution facility, a television broadcaster, or any other suitable facility for distributing video media (e.g., television programs, video-on-demand programs, pay-per-view programs) and audio media (e.g., music programming and music clips) to the equipment of subscribers of the corresponding cable, satellite, or IPTV system. In some approaches, distribution facility 104 may also distribute other media to users, such as video and audio clips, web pages, and interactive applications, that may be offered to subscribers of a given cable, satellite, or IPTV system. There are typically numerous distribution facilities 104 in system 100, but only one is shown in FIG. 1 to avoid overcomplicating the drawing.

Distribution facility 104 may be connected to various user equipment devices 108, 110, and 112. Such user equipment devices may be located, for example, in the homes of users. User equipment devices may include user television equipment 110, user computer equipment 112, or any other type of user equipment suitable for accessing media. User equipment 108 may be any type of user equipment (e.g., user television equipment, user computer equipment, cellular phones, handheld video players, gaming platforms, etc.) and, for simplicity, user equipment devices may be referred to generally as user equipment 108.

User equipment devices 108, 110, and 112 may receive media (such as television, music, web pages, etc.) and other data from distribution facility 104 over communications paths, such as communications paths 114, 116, and 118, respectively. User equipment devices 108, 110, 112 may also transmit signals to distribution facility 104 over paths 114, 116, and 118, respectively. Paths 114, 116, and 118 may be cables or other wired connections, free-space connections (e.g., for broadcast or other wireless signals), satellite links, or any other suitable link or combination of links.

A second approach illustrated in FIG. 1 by which media and media guidance are provided to end users is a non-television-centric approach. In this approach media such as video (which may include television programming), audio, images, web pages, or a suitable combination thereof, are provided to equipment of a plurality of users (e.g., user equipment 108, user television equipment 110, and user computer equipment 112) by server 130 via communications network 126. This approach is non-television-centric because media (e.g., television programming) is provided by and delivered at least partially, and sometimes exclusively, via equipment that have not traditionally been primarily focused on the television viewing experience. Non-television-centric equipment is playing a larger role in the television viewing experience.

In some embodiments for this approach, communications network 126 is the Internet. Server 130 may provide for example, a web site that is accessible to the user's equipment and provides an on-line guidance application for the user. In such approaches, the user's equipment may be, for example, a PC or a hand-held device such as a PDA or web-enabled cellular telephone that incorporates a web browser. In other embodiments, server 130 uses the Internet as a transmission medium but does not use the Web. In such approaches, the user's equipment may run a client application that enables the user to access media. In still other approaches, communications network 126 is a private communications network, such as a cellular phone network, that does not include the Internet.

In yet other approaches, communications network 126 includes a private communications network and the Internet. For example, a cellular telephone or other mobile-device service provider may provide Internet access to its subscribers via a private communications network, or may provide media such as video clips or television programs to its subscribers via the Internet and its own network.

The aforementioned approaches for providing media may, in some embodiments, be combined. For example, a distribution facility 104 may provide a television-centric media delivery system, while also providing users' equipment (e.g., 108, 110 and 112) with access to other non-television-centric delivery systems provided by server 130. For example, a user's equipment may include a web-enabled set-top box or a television enabled PC. Distribution facility 104 may, in addition to television and music programming, provide the user with Internet access whereby the user may access server 130 via communications network 126. Distribution facility 104 may communicate with communications network 126 over any suitable path 134, such as a wired path, a cable path, fiber-optic path, satellite path, or combination of such paths.

Media guidance applications may be provided using any approach suitable for the type of media and distribution system for which the applications are used. Media guidance applications may be, for example, stand alone applications implemented on users' equipment. In other embodiments, media guidance applications may be client-server applications where only the client resides on the users' equipment. In still other embodiments, guidance applications may be provided as web sites accessed by a browser implemented on the users' equipment. Whatever the chosen implementation, the guidance application will require information about the media for which it is providing guidance. For example, titles or names of media, brief descriptions, or other information may be necessary to allow users to navigate among and find desired media selections.

In some television-centric embodiments, for example, the guidance application may be a stand-alone interactive television program guide that receives program guide data via a data feed (e.g., a continuous feed, trickle feed, or data in the vertical blanking interval of a channel). Data source 120 in system 100 may include a program listings database that is used to provide the user with television program-related information such as scheduled broadcast times, titles, channels, ratings information (e.g., parental ratings and critic's ratings), detailed title descriptions, genre or category information (e.g., sports, news, movies, etc.), program format (e.g., standard definition, high definition) and information on actors and actresses. Data source 120 may also be used to provide advertisements (e.g., program guide advertisements and advertisements for other interactive television applications), real-time data such as sports scores, stock quotes, news data, and weather data, application data for one or more media guidance applications or other interactive applications, and any other suitable data for use by system 100. As another example, data source 120 may provide data indicating the types of information that may be included in interactive media guidance overlays (e.g., at the request of the user, absent user modification, etc.).

Program guide data may be provided to user equipment, including user equipment located on home network 113, using any suitable approach. For example, program schedule data and other data may be provided to the user equipment on a television channel sideband, in the vertical blanking interval of a television channel, using an in-band digital signal, using an out-of-band digital signal, or by any other suitable data transmission technique. Program schedule data and other data may be provided to user equipment on multiple analog or digital television channels. Program schedule data and other data may be provided to the user equipment with any suitable frequency (e.g., continuously, daily, in response to a request from user equipment, etc.).

In some television-centric embodiments, guidance data from data source 120 may be provided to users' equipment using a client-server approach. For example, a guidance application client residing on the user's equipment may initiate sessions with server 140 to obtain guidance data when needed. In some embodiments, the guidance application may initiate sessions with server 140 via a home network server (e.g., a server located in home network 113 that supports the user equipment devices located in home network 113).

There may be multiple data sources (such as data source 120) in system 100, although only one data source is shown in FIG. 1 to avoid overcomplicating the drawing. For example, a separate data source may be associated with each of a plurality of television broadcasters and may provide data that is specific to those broadcasters (e.g., advertisements for future programming of the broadcasters, logo data for displaying broadcasters' logos in program guide display screens, etc.). Data source 120 and any other system components of FIG. 1 may be provided using equipment at one or more locations. Systems components are drawn as single boxes in FIG. 1 to avoid overcomplicating the drawings.

Data source 120 may provide data to distribution facility 104 over communications path 122 for distribution to the associated user equipment and home network 113 (discussed below) over paths 114, 116, 118, and 119 (e.g., when data source 120 is located at a main facility). Communications path 122 may be any suitable communications path such as a satellite communications path or other wireless path, a fiber-optic or other wired communications path, a path that supports Internet communications, or other suitable path or combination of such paths.

In some television-centric and non-television centric approaches, data source 120 may provide guidance data directly to user equipment 108 over path 124, communications network 126, and path 128 (e.g., when data source 120 is located at a facility such as one of programming sources 102). In some embodiments of the present invention, data source 120 may provide guidance data directly to user equipment located on home network 113 (discussed below) over path'124, communications network 126, and path 139 (e.g., when data source 120 is located at a facility such as one of programming sources 102). Paths 124, 128, and 139 may be wired paths such as telephone lines, cable paths, fiber-optic paths, satellite paths, wireless paths, any other suitable paths or a combination of such paths. Communications network 126 may be any suitable communications network, such as the Internet, the public switched telephone network, or a packet-based network.

User equipment devices, including user equipment devices located on home network 113 (discussed below), such as user television equipment and personal computers, may use the program schedule data and other interactive media guidance application data to display program listings and other information (e.g., information on digital music) for the user. An interactive television program guide application or other suitable interactive media guidance application may be used to display the information on the user's display (e.g., in one or more overlays that are displayed on top of video for a given television channel). Interactive displays may be generated and displayed for the user using any suitable approach. In one suitable approach, distribution facility 104, server 130, or another facility, may generate application display screens and may transmit the display screens to user equipment for display. In another suitable approach, user equipment may store data for use in one or more interactive displays (e.g., program schedule data, advertisements, logos, etc.), and an interactive media guidance application implemented at least partially on the user equipment may generate the interactive displays based on instructions received from distribution facility 104, server 130 or another facility. In some embodiments of the present invention, user equipment may store only the data that is used to generate the interactive television displays (e.g., storing logo data for a particular television broadcaster only if the logo is to be included in one or more interactive television displays). In some embodiments of the present invention, user equipment may store data that is not necessarily used to generate the interactive television displays (e.g., storing advertisements associated with a particular television broadcaster that may or may not be displayed depending on, for example, the outcome of negotiations with the television broadcaster). Any other suitable approach or combination of approaches may be used to generate and display interactive overlays for the user.

In still other embodiments, interactive media guidance applications (television-centric and non-television centric) may be provided online as, for example, websites. For example, server 130 may provide an online interactive television program guide. As another example, user equipment 108 may be a mobile device, such as a cellular telephone or personal digital assistant (PDA). The mobile device may be web-enabled to allow the user to access an on-line guidance application (which may be modified from its original version to make it appropriate for a cellular phone). Alternatively, the mobile device may have an applet that communicates with server 130 to obtain guidance data via the Internet.

Server 130 may receive program schedule data and other data from data source 120 via communications path 124, communications network 126, and communications path 132 or via another suitable path or combination of paths. Path 132 may be a satellite path, fiber-optic path, wired path, or any other path or combination of paths. User equipment 108 may access the on-line interactive media guidance application and other sources from server 130 via communications path 128. User equipment 108 may also access the application and other services on server 130 via communications path 114, distribution facility 104, and communications path 134. For example, a cable modem or other suitable equipment may be used by user equipment 108 to communicate with distribution facility 104.

User equipment such as user television equipment 110, user computer equipment 112, and user equipment located on home network 113 may access the on-line interactive media guidance application and server 130 using similar arrangements. User television equipment 110 may access the on-line interactive media guidance application and server 130 using communications path 136 or using path 116, distribution facility 104, and path 134. User computer equipment 112 may access the on-line interactive media guidance application and server 130 using communications path 138 or using path 118, distribution facility 104, and path 134. User equipment located on home network 113 may access the on-line media guidance application and server 130 using communications path 139 or using path 119, distribution facility 104, and path 134. Paths 136, 138, and 139 may be any suitable paths such as wired paths, cable paths, fiber-optic paths, wireless paths, satellite paths, or a combination of such paths.

In some embodiments, system 100 may support other interactive applications in addition to the interactive media guidance applications. Such applications may be implemented using any suitable approach. For example, the interactive applications may be implemented locally on the user equipment or in a distributed fashion (e.g., using a client-server architecture in which the user equipment serves at least partly, and for at least some of the time, as the client and a server, such as server 140 at distribution facility 104, server 130, or other suitable equipment acts as the server). Other distributed architectures may also be used if desired. Moreover, some or all of the features of the interactive applications of system 100 (including the media guidance application) may be provided using operating system software or middleware software. Such operating system software and middleware may be used instead of or in combination with application-level software. In yet other approaches, interactive applications may also be supported by servers or other suitable equipment at one or more service providers such as service provider 142. Regardless of the particular arrangement used, the software that supports these features may be referred to as an application or applications.

For example, an interactive application such as a home shopping service may be supported by a service provider such as service provider 142 that has sales representatives, order fulfillment facilities, account maintenance facilities, and other equipment for supporting interactive home shopping features. A home shopping application that is implemented using the user equipment may be used to access the service provider to provide such features to the user. The user equipment may access service provider 142 via distribution facility 104 and communications path 144 or via communications network 126 and communications path 146. Communications paths such as paths 144 and 146 may be any suitable paths such as wired paths, cable paths, fiber-optic paths, satellite paths, or a combination of such paths.

Another example of an interactive application is a home banking application. A home banking service may be supported using personnel at facilities such as service provider 142. An interactive home banking application that is implemented using the user equipment may access the home banking service via distribution facility 104 and communications path 144 or via communications network 126 and communications path 146.

If desired, an interactive media guidance application such as a network-based video recorder or a video-on-demand application may be supported using server 140, server 130, a home network server, or equipment at service provider 142. Video-on-demand content and video recorded using a network-based video recorder arrangement may be stored on server 140 or server 130 or a home network server or at service provider 142 and may be provided to the user equipment when requested by users. An interactive television program guide, for example, may be used to support the functions of a personal video recorder (sometimes called a digital video recorder) that is implemented using user equipment 108. Illustrative equipment that may be used to support personal video recorder functions include specialized personal video recorder devices, integrated receiver decoders (IRDs), set-top boxes with integrated or external hard drives, or personal computers with video recording capabilities.

Interactive applications such as media guidance applications (e.g., interactive television program guide applications and video-on-demand applications), home shopping applications, home banking applications, game applications, and other applications (e.g., applications related to e-mail and chat or other communications functions, etc.) may be provided as separate applications that are accessed through a navigation shell application (i.e., a menu application with menu options corresponding to the applications). The features of such applications may be combined. For example, games, video-on-demand services, home shopping services, network-based video recorder functions, personal video recorder functions, navigational functions, program guide functions, communications functions, and other suitable functions may be provided using one application or any other suitable number of applications. The one or more applications may display various overlays on user equipment including, for example, interactive television information on top of video for a given television channel.

Interactive television program guide applications, home banking applications, home shopping applications, network-based video recorder and personal video recorder applications, video-on-demand applications, gaming applications, communications applications, and navigational applications are only a few illustrative examples of the types of interactive media guidance and other applications that may be supported by system 100. Other suitable interactive applications that may be supported include news services, web browsing and other Internet services, and interactive wagering services (e.g., for wagering on horse races, sporting events, and the like). Interactive television overlays that are displayed by these applications may also be customized in accordance with the present invention.

Users may have multiple types of user equipment by which they access media and obtain media guidance. For example, some users may have home networks that are accessed by in-home and mobile devices. As shown in FIG. 1, home network 113 communicates with distribution facility 104 and server 130 over paths 119 and 139 (and, in the case of server 130, communications network 126). Such home networks 113 may be located, for example, in homes of users or distributed, for example, among homes of users. Home networks 113 may each include a plurality of interconnected user equipment devices, such as, for example user equipment devices 108, 110 and 112. In some embodiments, users may control in-home devices via a media guidance application implemented on a remote device. For example, users may access an online media guidance application on a website via a personal computer at their office, or a mobile device such as a PDA or web-enabled cellular telephone. The user may set settings (e.g., recordings, reminders, or other settings) on the on-line guidance application to control the user's in-home equipment. The on-line guide may control the user's equipment directly, or by communicating with a media guidance application on the user's in-home equipment.

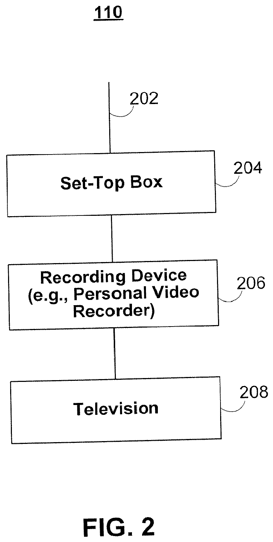

FIGS. 2-6 show illustrative arrangements for user equipment. An illustrative set-top box-based arrangement for user equipment 110 is shown in FIG. 2. User television equipment 110 may be stand-alone or a part of home network 113 (FIG. 1). Input/output 202 may be connected to communications paths such as paths 116 and 136 (FIG. 1). Input/output functions may be provided by one or more wires or communications paths, but are shown as a single path in FIG. 2 to avoid overcomplicating the drawing. Television programming, program guide data, and any other suitable interactive media guidance application data or other data may be received using input/output 202. Commands and requests and other data generated as a result of user interactions with the interactive media guidance application may also be transmitted over input/output 202.

Set-top box 204 may be any suitable analog or digital set-top box (e.g., a cable set-top box). Set-top box 204 may contain an analog tuner for tuning to a desired analog television channel (e.g., a channel comprising television programming, interactive television data, or both). Set-top box 204 may also contain digital decoding circuitry for receiving digital television channels (e.g., channels comprising television or music programming, interactive television data, etc.). Set-top box 204 may also contain a high-definition television tuner for receiving and processing high-definition television channels. Analog, digital, and high-definition channels may be handled together if desired. Multiple tuners may be provided (e.g., to handle simultaneous watch and record functions or picture-in-picture (PIP) functions). Box 204 may be an integrated receiver decoder (IRD) that handles satellite television. If desired, box 204 may have circuitry for handling cable, over-the-air broadcast, and satellite content.

Set-top box 204 may be configured to output media, such as television programs, in a preferred format. Because television programs may be received in a variety of formats, set-top box 204 may contain scaler circuitry for upconverting and downconverting television programs into the preferred output format used by set-top box 204. For example, set-top box 204 may be configured to output television programs in 720p. In this example, the scaler circuitry may upconvert standard-definition television programs having 480 lines of vertical resolution to 720p format and downconvert certain high-definition television programs having 1080 lines of vertical resolution to 720p format.

Box 204 may include a storage device (e.g., a digital storage device such as a hard disk drive) for providing recording capabilities. Box 204 may also be connected to a recording device 206 such as a video cassette recorder, personal video recorder, optical disc recorder, or other device or devices with storage capabilities. In some embodiments, box 204 may be configured to record either standard-definition television programs or high-definition television programs. In some embodiments, box 204 may be configured to record both standard-definition television programs and high-definition television programs.

Set-top box 204 contains a processor (e.g., a microcontroller or microprocessor or the like) that is used to execute software applications. Set-top box 204 may contain memory such as random-access memory for use when executing applications. Nonvolatile memory may also be used (e.g., to launch a boot-up routine and other instructions). Hard disk storage in box 204 or in recording device 206 may be used to back up data and to otherwise support larger databases and storage requirements than may be supported using random-access memory approaches. Hard disk storage in box 204 or in recording device 206 may also be used to store and back up program guide settings or saved user preferences.

Set-top box 204 may have infrared (IR) or other communications circuitry for communicating with a remote control or wireless keyboard. Set-top box 204 may also have dedicated buttons and a front-panel display. The front-panel display may, for example, be used to display the current channel to which the set-top box is tuned.

Set-top box 204 may also have communications circuitry such as a cable modem, an integrated services digital network (ISDN) modem, a digital subscriber line (DSL) modem, a telephone modem, or a wireless modem for communications with other equipment. Such communications may involve the Internet or any other suitable communications networks or paths. If desired, the components of set-top box 204 may be integrated into other user equipment (e.g., a television or video recorder).

Recording device 206 may be used to record videos provided by set-top box 204. For example, if set-top box 204 is tuned to a given television channel, the video signal for that television channel may be passed to recording device 206 for recording on a videocassette, compact disc, digital video disk, or internal hard drive or other storage device. In some embodiments, recording device 206 may be configured to record either standard-definition television programs or high-definition television programs. In some embodiments, recording device 206 may be configured to record both standard-definition television programs and high-definition television programs. Recording device 206 may have communications circuitry such as a cable modem, an ISDN modem, a DSL modem, or a telephone modem for communications with other equipment. Such communications may involve the Internet or any other suitable communications networks or paths. The components of recording device 206 may be integrated into other user equipment (e.g., a television, stereo equipment, etc.).

Recording device 206 may be controlled using a remote control or other suitable user interface. If desired, video recorder functions such as start, stop, record and other functions for device 206 may be controlled by set-top box 204. For example, set-top box 204 may control recording device 206 using infrared commands directed toward the remote control inputs of recording device 206 or set-top box 204 may control recording device 206 using other wired or wireless communications paths between box 204 and device 206.

The output of recording device 206 may be provided to television 208 for display to the user. In some embodiments, television 208 may be capable of displaying high-definition programming (i.e., HDTV-capable). If desired, multiple recording devices 206 or no recording device 206 may be used. If recording device 206 is not present or is not being actively used, the video signals from set-top box 204 may be provided directly to television 208. Any suitable television or monitor may be used to display the video. For example, if the video is in a high-definition format, an HDTV-capable television or monitor is required to display the video. In the equipment of FIG. 2 and the other equipment of system 100 (FIG. 1), the audio associated with various video items is typically distributed with those video items and is generally played back to the user as the videos are played. In some embodiments, the audio may be distributed to a receiver (not shown), which processes and outputs the audio via external speakers (not shown).

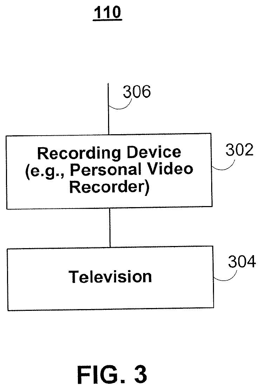

Another illustrative arrangement for user television equipment 110 (FIG. 1) is shown in FIG. 3. User television equipment 110 may be stand-alone or a part of home network 113 (FIG. 1). In the example of FIG. 3, user television equipment 110 includes a recording device 302 such as a digital video recorder (e.g., a personal video recorder (PVR)) that uses a hard disk or other storage for recording video. Recording device 302 may alternatively be a digital video disc recorder, compact disc recorder, videocassette recorder, or other suitable recording device. Equipment 110 of FIG. 3 may also include a television 304. In some embodiments, television 304 may be HDTV-capable. Input/output 306 may be connected to communications paths such as paths 116 and 136 (FIG. 1). Television programming, program schedule data, and other data (e.g., advertisement data, data indicating one or more television channels for which the display of an overlay is to be customized, etc.) may be received using input/output 306. Commands and requests and other data from the user may be transmitted over input/output 306.

Recording device 302 may contain at least one analog tuner for tuning to a desired analog television channel (e.g., to display video for a given television channel to a user, to receive program guide data and other data) and multiple other tuners may also be provided. Recording device 302 may also contain digital decoding circuitry for receiving digital television programming, music programming, program guide data, and other data on one or more digital channels. Recording device 302 may also contain circuitry for receiving high-definition television channels. If desired, recording device 302 may contain circuitry for handling analog, digital, and high-definition channels. Recording device 302 also contains a processor (e.g., a microcontroller or microprocessor or the like) that is used to execute software applications. Recording device 302 may contain memory such as random-access memory for use when executing applications. Nonvolatile memory may also be used to store a boot-up routine or other instructions. The hard disk and other storage in recording device 302 may be used to support databases (e.g., program guide databases or other interactive television application databases). The hard disk or other storage in recording device 302 may also be used to record video such as television programs or video-on-demand content or other content provided to recording device 302 over input/output 306.

Recording device 302 may have IR communications circuitry or other suitable communications circuitry for communicating with a remote control. Recording device 302 may also have dedicated buttons and a front-panel display. The front-panel display may, for example, be used to display the current channel to which the recording device is tuned.

Recording device 302 may also have communications circuitry such as a cable modem, an ISDN modem, a DSL modem, a telephone modem, or a wireless modem for communications with other equipment. Such communications may involve the Internet or other suitable communications networks or paths.

If desired, recording device 302 may include a satellite receiver or other equipment that has wireless communications circuitry for receiving satellite signals.

Recording device 302 of FIG. 3 or recording device 206 of FIG. 2 may record new video while previously recorded video is being played back on television 304 or 208. This allows users to press a pause button during normal television viewing. When the pause button is pressed, the current television program is stored on the hard disk of digital video recorder 302. When the user presses play, the recorded video may be played back. This arrangement allows the user to seamlessly pause and resume television viewing. Recording devices 302 and 206 may also be used to allow a user to watch a previously-recorded program while simultaneously recording a new program.

The set-top box arrangement of FIG. 2 and the personal video recorder with a built-in set-top box arrangement of FIG. 3 are merely illustrative. Other arrangements may be used if desired. For example, user television equipment may be based on a WebTV box, a personal computer television (PC/TV), or any other suitable television equipment arrangement. If desired, the functions of components such as set-top box 204, recording device 302, a WebTV box, or PC/TV or the like may be integrated into a television or personal computer or other suitable device.

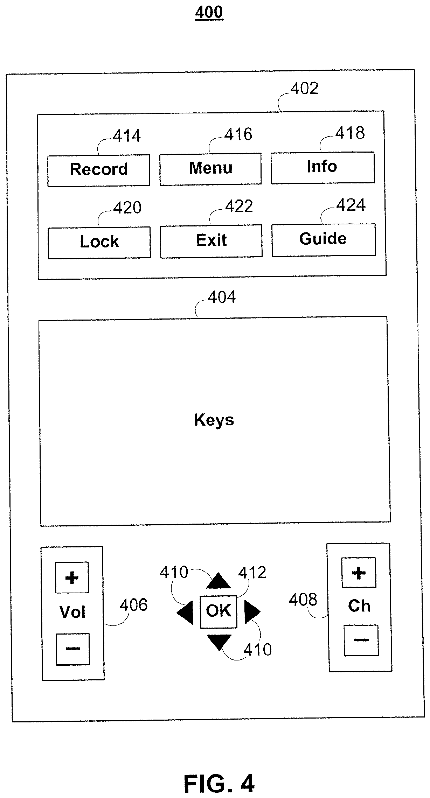

An illustrative remote control 400 for operating user television equipment 110 (FIG. 1) or suitable user computer equipment 112 is shown in FIG. 4. Remote control 400 is only illustrative and any other suitable user input interface may be used to operate user equipment (e.g., a mouse, trackball, keypad, keyboard, touch screen, voice recognition system, etc.). Remote control 400 may have function keys 402 and other keys 404 such as keypad keys, power on/off keys, pause, stop, fast-forward and reverse keys. Volume up and down keys 406 may be used for adjusting the volume of the audio portion of a video. Channel up and down keys 408 may be used to change television channels and to access content on virtual channels. Cursor keys 410 may be used to navigate on-screen menus. For example, cursor keys 410 may be used to position an on-screen cursor, indicator, or highlight (sometimes all generically referred to herein as a highlight or highlight region) to indicate interest in a particular option or other item on a display screen that is displayed by the interactive television application.

OK key 412 (sometimes called a select or enter key) may be used to select on-screen options that the user has highlighted.

Keys 402 may include RECORD key 414 for initiating recordings. MENU button 416 may be used to direct an interactive media guidance application to display a menu on the user's display screen (e.g., on television 208 or 304 or on a suitable monitor or computer display). INFO button 418 may be used to direct an interactive media guidance application to display an information display screen. For example, when a user presses INFO key 418 while video for a given television channel is displayed for the user, an interactive television program guide may display a FLIP/BROWSE overlay including program schedule information for the current program on the given television channel on top of the video. As another example, when a particular program listing in an interactive television program listings display screen is highlighted, the user pressing INFO button 418 may cause an interactive television program guide to provide additional program information associated with that program listing (e.g., a program description, actor information, schedule information, etc.).

LOCK button 420 may be used to modify access privileges. For example, a parent may use LOCK button 420 or on-screen options to establish parental control settings for the interactive media guidance application. The parental control settings may be time-based settings (e.g., to prevent a child from watching television during a particular time block, such as from 3:00 PM to 5:00 PM). The parental control settings may also be used to, for example, block programming based on rating, channel, and program title. A locked or blocked program (or other media) is typically not viewable until the interactive media guidance application is provided with a suitable personal identification number (PIN). Once this PIN has been entered, the interactive media guidance application will unlock the user's equipment and allow the locked content to be accessed.

EXIT button 422 may be used to exit the interactive media guidance application or to exit a portion of the interactive media guidance application (e.g., to cause an interactive television program guide to remove a FLIP, BROWSE, or other interactive television overlay from the display screen). GUIDE button 424 may be used to invoke an interactive television program guide (e.g., a program guide menu screen, program listings screen, or other program guide screen).

The keys shown in FIG. 4 are merely illustrative. Other keys or buttons may be provided if desired. For example, a music button may be used to access music with the interactive media guidance application. An edit button may be used to edit stored content (e.g., to remove commercials, remove portions of a video, etc.). Alphanumeric buttons may be used to enter alphanumeric characters. A last or back button may be used to browse backward in the interactive media guidance application (e.g., to return to a previous channel, web page, or other display screen). Video recorder function buttons such as a play button, pause button, stop button, rewind button, fast-forward button, and record button, may be used to control video recorder functions (local or network-based) in system 100 (FIG. 1). A help key may be used to invoke help functions such as context-sensitive on-screen help functions.

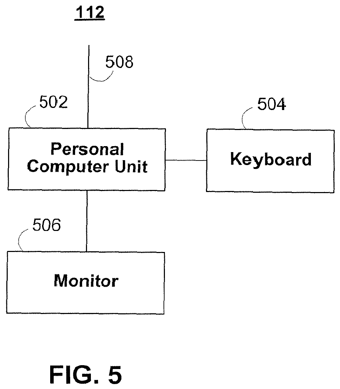

Illustrative user computer equipment 112 (FIG. 1) is shown in FIG. 5. User computer equipment 112 may be stand-alone or a part of home network 113 (FIG. 1). In the arrangement of FIG. 5, personal computer unit 502 may be controlled by the user using keyboard 504 and/or other suitable user input device such as a trackball, mouse, touch pad, touch screen, voice recognition system, or a remote control, such as remote control 400 of FIG. 4. Video content, such as television programming or web pages having video elements, and interactive media guidance application display screens may be displayed on monitor 506. Television and music programming, media guidance application data (e.g., television program guide data), video-on-demand content, video recordings played back from a network-based video recorder, and other data may be received from paths 118 and 138 (FIG. 1) using input/output 508. User commands and other information generated as a result of user interactions with the interactive media guidance application and system 100 (FIG. 1) may also be transmitted over input/output 508.

Personal computer unit 502 may contain a television or video card, such as a television tuner card, for decoding analog, digital, and high-definition television channels and for handling streaming video content. Multiple video cards (e.g., tuner cards) may be provided if desired. An illustrative television tuner card that may be used may contain an analog television tuner for tuning to a given analog channel, digital decoding circuitry for filtering out a desired digital television or music channel from a packetized digital data stream, and a high-definition television tuner for tuning to a high-definition channel. Any suitable card or components in computer unit 502 may be used to handle video and other content delivered via input/output line 508 if desired.

Personal computer unit 502 may contain one or more processors (e.g., microprocessors) that are used to run the interactive media guidance application or a portion of the interactive media guidance application.

Personal computer unit 502 may include a hard drive, a recordable DVD drive, a recordable CD drive, or other suitable storage device or devices that stores video, program guide data, and other content. The interactive media guidance application and personal computer unit 502 may use a storage device or devices to, for example, provide the functions of a personal video recorder.

User equipment, such as user equipment 108, user television equipment 110, user computer equipment 112, and user equipment located on home network 113 (FIG. 1), may be used with network equipment such as server 130, server 140, a home network server, and equipment at service providers such as service provider 142 of FIG. 1 to provide network-based video recording functions. Video recording functions may be provided by storing copies of television programs and other video content on a remote server (e.g., server 130 or server 140 or a home network server) or other network-based equipment, such as equipment at a service provider such as service provider 142.

Video recordings may be made in response to user commands that are entered at user equipment 108 or user equipment located on home network 113 (FIG. 1). In a personal video recorder arrangement, the interactive media guidance application may be used to record video locally on the user equipment in response to the user commands. In a network-based video recorder arrangement, the interactive media guidance application may be used to record video or to make virtual recordings (described below) on network equipment such as server 130, server 140, a home network server, or equipment at service provider 142 in response to the user commands. The user commands may be provided to the network equipment over the communications paths shown in FIG. 1. The personal video recorder arrangement and the network-based video recorder arrangement can support functions such as fast-forward, rewind, pause, play, and record.

To avoid unnecessary duplication in a network-based video recorder environment, system 100 may provide network-based video recording capabilities by using virtual copies or recordings. With this approach, each user may be provided with a personal area on the network that contains a list of that user's recordings. The video content need only be stored once (or a relatively small number of times) on the network equipment, even though a large number of users may have that video content listed as one of their recordings in their network-based video recorder personal area. Personal settings or any other suitable data may be stored in a user's personal area on the network.

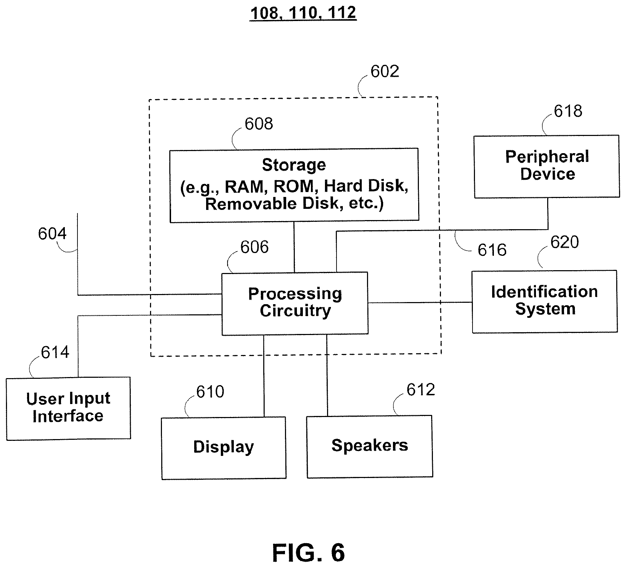

The user television equipment and user computer equipment arrangements described above are merely illustrative. A more generalized embodiment of illustrative user equipment 108, 110, and 112 (FIG. 1) and user equipment located on home network 113 (FIG. 1) is shown in FIG. 6. Control circuitry 602 is connected to input/output 604. Input/output 604 may be connected to one or more communications paths such as paths 114, 116, 118, 128, 136, and 138 of FIG. 1. Media (e.g., television programming, music programming, other video and audio, and web pages) may be received via input/output 604 (e.g., from programming sources 102, servers or other equipment, such as server 130, service providers such as service provider 142, distribution facility 104, etc.). Interactive media guidance application data, such as program schedule information for an interactive television program guide, may be received from data source 120 via input/output 604. Input/output 604 may also be used to receive data from data source 120 for other interactive television applications. The user may use control circuitry 602 to send and receive commands, requests, and other suitable data using input/output 604.

Control circuitry 602 may be based on any suitable processing circuitry 606 such as processing circuitry based on one or more microprocessors, microcontrollers, digital signal processors, programmable logic devices, etc. In some embodiments, control circuitry 602 executes instructions for an interactive media guidance application or other interactive application (e.g., web browser) from memory. Memory (e.g., random-access memory and read-only memory), hard drives, optical drives, or any other suitable memory or storage devices may be provided as storage 608 that is part of control circuitry 602. Tuning circuitry such as one or more analog tuners, one or more MPEG-2 decoders or other digital video circuitry, high-definition tuners, or any other suitable tuning or video circuits or combinations of such circuits may also be included as part of circuitry 602. Encoding circuitry (e.g., for converting over-the-air, analog, or digital signals to MPEG signals for storage) may also be provided. The tuning and encoding circuitry may be used by the user equipment to receive and display, play, or record a particular television or music channel or other desired audio and video content (e.g., video-on-demand content or requested network-based or local video recorder playback). Television programming and other video and on-screen options and information may be displayed on display 610. Display 610 may be a monitor, a television, or any other suitable equipment for displaying visual images. In some embodiments, display 610 may be HDTV-capable. Speakers 612 may be provided as part of a television or may be stand-alone units. Digital music and the audio component of videos displayed on display 610 may be played through speakers 612. In some embodiments, the audio may be distributed to a receiver (not shown), which processes and outputs the audio via speakers 612.

A user may control the control circuitry 602 using user input interface 614. User input interface 614 may be any suitable user interface, such as a mouse, trackball, keypad, keyboard, touch screen, touch pad, voice recognition interface, or a remote control.

Peripheral device 618 may also be connected to processing circuitry 606 over communications path 616. Peripheral devices may include cellular phones, personal data assistants, handheld media players, and any other suitable peripheral device. Communications path 616 may include for example, USB cables, IEEE 1394 cables, or wireless paths (e.g., Bluetooth, infrared). Processing circuitry 606 may provide content and data to peripheral device 618.

In some embodiments, user equipment device 108, 110, and 112 may comprise a peripheral device connected to a docking station. The display, speakers, user input interface, processing circuitry, and storage may be provided by the peripheral device. The docking station may allow the peripheral device to connect to input/output 604.

Processing circuitry 606 of user equipment device 108, 110, and 112 may further be coupled to identification system 620. Identification system 616 may be any suitable device for identifying a user in viewing vicinity of, or interacting with, a user equipment device. Such an identification system may increase or enhance a user's media viewing experience because there may be no need for the user to manually indicate the identity of the person viewing or interacting with the user device. Moreover, the identification system may enhance the user's ability to maintain or update personal user profiles (e.g., viewer history). An example of an identification system 616 may include a fingerprinting system, which may scan in a user a scanner (e.g., located on a remote control). Another example identification system 616 may include a retina scanner that is able to determine the identity of a user based on his or her retina. Yet another example of identification system 620 is a thermal imaging system that is able to identify a person based on his or her thermal profile. A further example of identification system 620 may include a motion sensor/camera system that takes a picture when a user trips the motion sensor. The picture may be cross-referenced with predetermined data (e.g., height and width) to ascertain the identity of the person or persons in the picture.

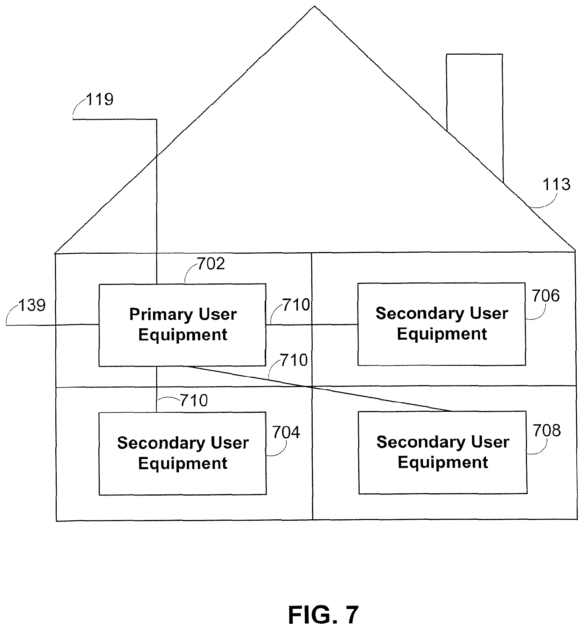

FIGS. 7, 8a, 8b, 8c, 9, and 10 show various illustrative home networks 113. The user equipment devices located on home network 113 may be able to share program data (such as program listings and program information), recorded content, program guide settings, and any other suitable data with other user equipment devices located on home network 113. Interactive television applications implemented on or accessible from user equipment devices located on home network 113 may be able to adjust program guide settings for interactive television applications implemented on or accessible from other user equipment devices located on home network 113.

FIG. 7 shows an illustrative home network 113 in accordance with the present invention. Home network 113 may include primary user equipment 702 and secondary user equipment 704, 706, and 708. Primary user equipment 702 may be connected to secondary user equipment 704, secondary user equipment 706, and secondary user equipment 708 via communication paths 710. Primary and secondary user equipment may each be any of user equipment 108, 110, and 112 (FIG. 1). Communications paths 710 may be any suitable communications path for in-home networks, such as wired paths, cable paths, fiber-optic paths, wireless paths, or a combination of such paths. Communications paths 119 and 139 may connect home network 113 to television distribution facility 104 (FIG. 1) and communications network 126 (FIG. 1), respectively, via primary user equipment 702. As shown, one or more pieces of secondary user equipment may be connected to primary user equipment 702 in a star configuration, if desired. User equipment devices may be located in different rooms within a home. For example, primary user equipment 702 may be placed in the parents' bedroom, secondary user equipment 708 may be placed in the children's room, secondary user equipment 704 may be placed in a living room, and secondary user equipment 706 may be placed in a guest room. With such an arrangement, the parents' bedroom may be used as a master location to adjust user settings for the program guides on the user equipment in the children's room and the other rooms.

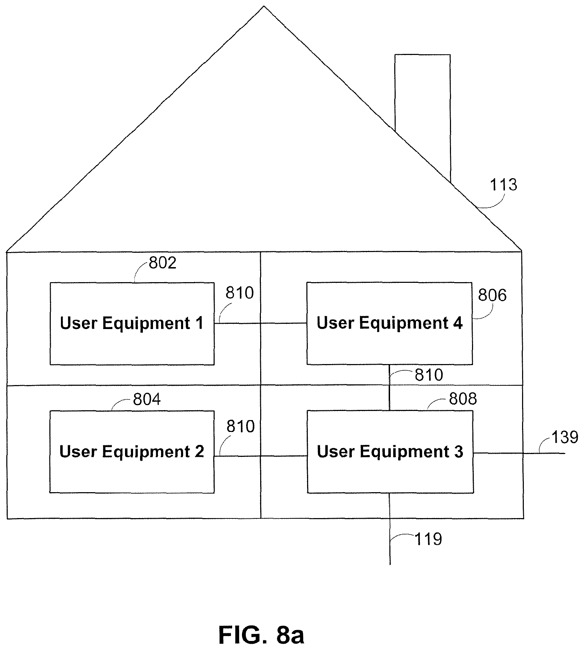

FIG. 8a is a diagram of an illustrative home network 113 in which a plurality of user equipment are implemented in a tree configuration in accordance with the present invention. Home network 113 may include user equipment 802, 804, 806, and 808, which are connected to each of the others via communications paths 810. User equipment 802, 804, 806, and 808 may each be any of user equipment 108, 110, and 112 (FIG. 1). It should be understood by one skilled in the art that not all of user equipment 802, 804, 806, and 808 may include recording devices (e.g., recording device 206 (FIG. 2) and recording device 302 (FIG. 3)). Communications paths 810 may be any suitable communications path for in-home networks, such as wired paths, cable paths, fiber-optic paths, wireless paths, or a combination of such paths. Two or more pieces of user equipment may be connected in this way. Communications paths 119 and 139 may connect home network 113 to television distribution facility 104 (FIG. 1) and communications network 126 (FIG. 1), respectively, via user equipment 808. Although, as illustrated, communications paths 119 and 139 are connected to user equipment 808, it could be connected to any one or more of user equipment 802, 804, 806, or 808. The equipment mentioned above may be placed in various rooms within a home. For example, user equipment 802 may be placed in a parents' bedroom, user equipment 804 may be placed in a children's room, user equipment 806 may be placed in a living room, and user equipment 808 may be placed in a guest room. With the arrangement of FIG. 8a, each piece of user equipment on home network 113 may communicate with each other piece of user equipment on home network 113 over communications paths 810.

Peripheral device 814 may be connected to user equipment device 808, which may provide peripheral device 814 with content and data. It should be understood by one skilled in the art that one or more peripheral devices 814 may be connected to any user equipment device regardless of the configuration of the home network. In some cases, peripheral devices may act as user equipment devices in a home network. For example, the role of user equipment 804 may be limited to receiving data and content from user equipment 808. This role may be filled by a peripheral device (e.g., a handheld media player) that is configured to communicate with user equipment 808 over communications path 810.

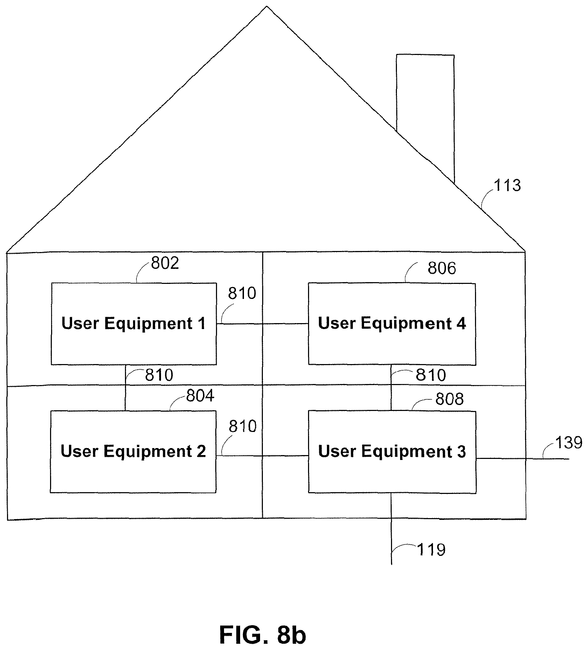

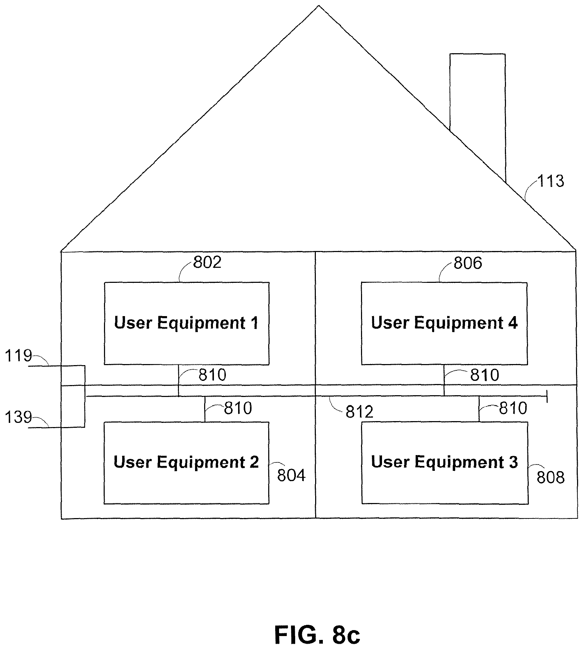

FIG. 8a shows home network 113 connected in a tree topology. If desired, this level of interconnectivity may be achieved using communications paths that are arranged in a ring configuration (FIG. 8b), bus configuration (FIG. 8c) or other suitable topology. Any of these topologies may use the types of communications paths described in connection with the arrangement of home network 113 shown in FIG. 8a. Home network 113 that is arranged in a bus topology may include bus 812 to interconnect the pieces of user equipment on home network 113 and communications paths 119 and 139.

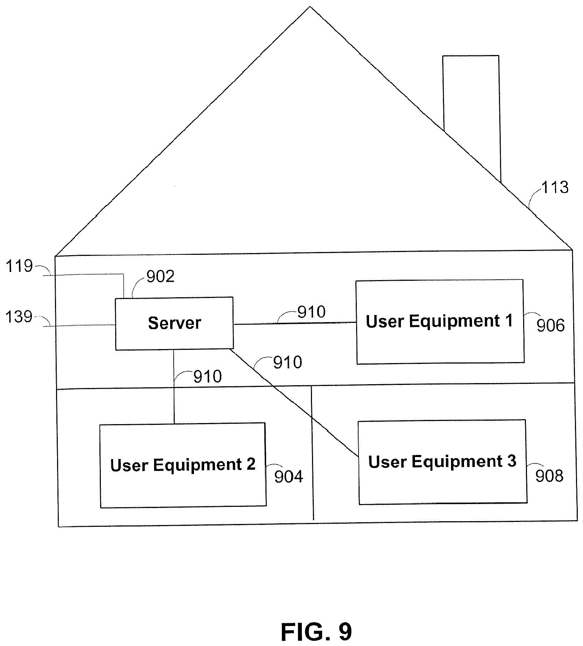

FIG. 9 shows an illustrative home network 113 based on a client-server architecture. Home network 113 may include server 902 and user equipment 904, 906, and 908. Server 902 may be connected to user equipment 904, 906, and 908 via communication paths 910. In some embodiments, server 902 may be embedded within one of the user equipment devices. Communications paths 119 and 139 may connect home network 113 to television distribution facility 104 (FIG. 1) and communications network 126 (FIG. 1), respectively, via server 902. User equipment 904, 906, and 908 may each be any of user equipment 108, 110, and 112 (FIG. 1). User equipment 904, 906, and 908 and server 902 may be placed in various rooms within a home. For example, server 902 may be placed in a den, user equipment 904 may be placed in a children's room, user equipment 906 may be placed in a living room, user equipment 908 may be placed in a parents' room. Communication paths 910 may be any suitable communications path for in-home networks, such as wired paths, cable paths, fiber-optic paths, wireless paths, or a combination of such paths.

As in the examples of FIGS. 8a, 8b, and 8c, different communications path arrangements such as buses, rings and the like, may be used to interconnect a server and user equipment on home network 113 based on a client-server architecture.

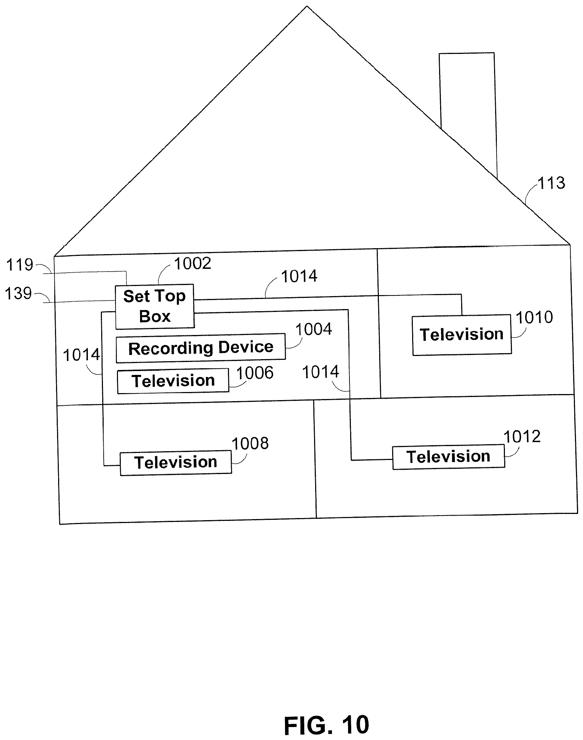

FIG. 10 shows an illustrative configuration of home network 113 based on a single set-top box. Home network 113 may include set-top box 1002, optional recording device 1004, and televisions 1006, 1008, 1010, and 1012. Set-top box 1002 may be similar to set-top box 204 (FIG. 2) Recording device 1004 may be similar to recording device 206 (FIG. 2). Televisions 1006, 1008, 1010, and 1012 may be similar to television 208 (FIG. 2). Set-top box 1002 may be connected to recording device 1004 and televisions 1008, 1010, and 1012 via communication paths 1014. Recording device 1004 may be connected to television 1006. Set-top box 1002 and recording device 1004 may be within a single box. If desired, any combination of televisions with or without recording devices may be connected in a similar manner. The set-top box, recording device and televisions of FIG. 10 may be placed in different rooms within a home. For example, set top box 1002, recording device 1004 and television 1006 may be placed in a parent's bedroom, television 1008 may be placed in a children's room, and television 1010 may be placed in a living room, and television 1012 may be placed in a guest room. Communication paths 1014 may be any suitable communications path for in-home networks, such as wired paths, cable paths, fiber-optic paths, wireless paths, satellite paths, or a combination of such paths. Communications paths 119 and 139 may connect home network 113 to television distribution facility 104 (FIG. 1) and communications network 126 (FIG. 1), respectively, via set top box 1002.

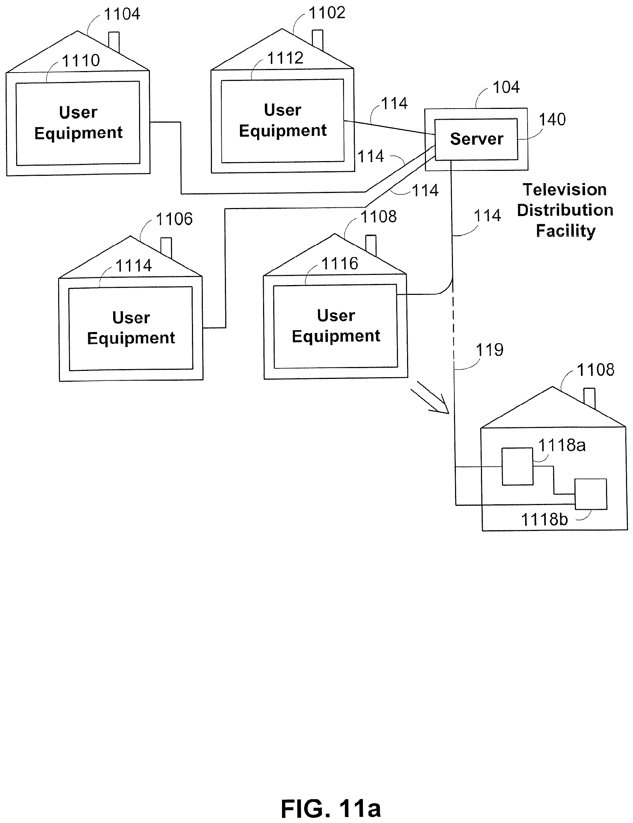

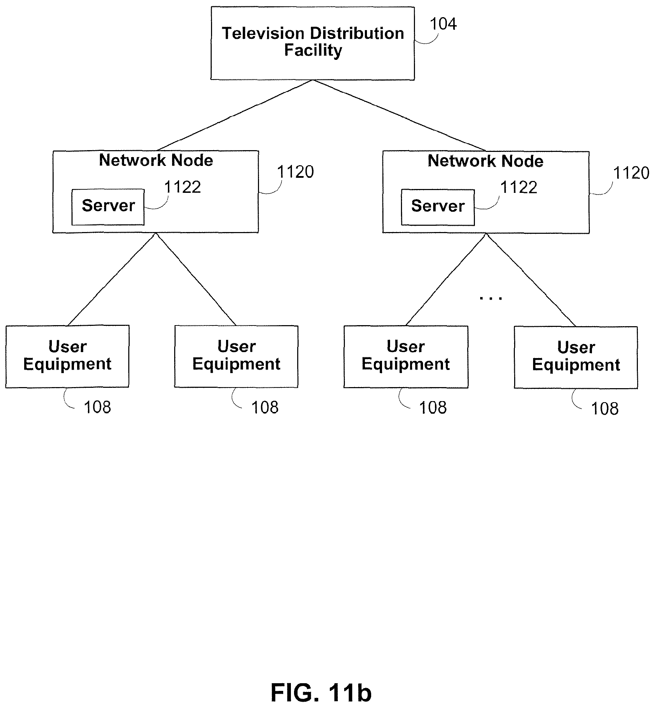

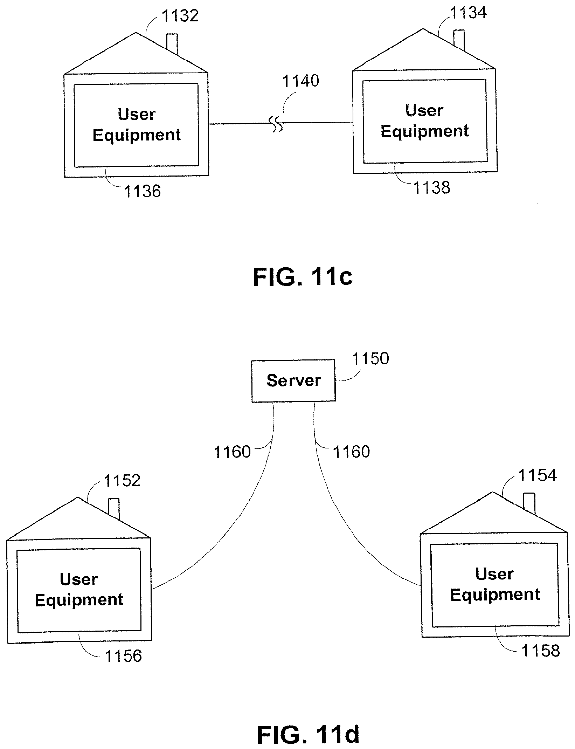

FIGS. 11a, 11b, 11c, and 11d show illustrative configurations of connections between home networks and television distribution facility 104 (FIG. 1). Only one user equipment device is shown on the home networks in FIGS. 11b, 11c, and 11d to avoid over-complicating the drawings. However, the home networks shown in FIGS. 11a, 11b, 11c, and 11d may contain multiple pieces of user equipment configured as shown in FIGS. 7, 8a, 8b, 8c, 9, or 10.

FIG. 11a shows an illustrative configuration in which multiple homes are connected to a common server. Server 140 (FIG. 1) may be located at television distribution facility 104 (FIG. 1). Television distribution facility 104 may be at or may be one of private home, a commercial building, a network node, or other suitable structure that may be connected to a plurality of homes. In the example of FIG. 11a, server 140 is connected to user equipment 1110, 1112, 1114, and 1116 that is located in homes 1104, 1102, 1106, and 1108, respectively via communication paths 114 (FIG. 1). When multiple user equipment devices exist within a home, such as home 1109, as shown by devices 1118a and 1118b, each user equipment device may communicate with the server 140 independently via communication paths 119 (FIG. 1). Alternatively, only one device may communicate with server 140 while the other device communicates via a home network. In other words, in separate arrangements, there are any of 1) multiple connections to server 140 and each user equipment device communicates with server 140 independently with no need for an in-home network, 2) only one connection to server 140 and each user equipment device communicates with each other through an in-home network, or 3) each user equipment device communicates with server 140 and with each other through an in-home network.

As shown in FIG. 11b, the capabilities of server 140 (FIG. 1) may be provided using servers 1122 located at network nodes 1120. Servers, such as servers 1122, may be used instead of server 140 or may be used in conjunction with a server 140 located at television distribution facility 104 (FIG. 1). Servers 1122 may be connected to one or more user equipment 108 (FIG. 1). Servers 1122 may also be connected to one or more home networks, such as, for example home network 113 (FIG. 1).

As shown in FIG. 11c, user equipment in different homes may be connected by communications links. For example, user equipment 1136 may be connected to user equipment 1138 via link 1140. Link 1140 may be a wired or wireless link. In this manner, home 1132 and home 1134 may share program guide settings and recorded content. Home networks located in different homes may also be interconnected in this manner. In some embodiments, a group of homes (i.e., more than two homes) may also be connected to share program guide settings and recorded content. A tree, ring, or bus configuration may be used to connect the group of homes.

As shown in FIG. 11d, user equipment in different homes may be connected via an outside server. For example, user equipment 1156 may be connected to user equipment 1158 via server 1150. Communication paths 1160 may be a wired or wireless path. In this manner, home 1152 and home 1154 may share program guide settings and recorded content. Home networks located in different homes may also be interconnected in this manner. In some embodiments, a group of homes (i.e., more than two homes) may also be connected to server 1150 to share program guide settings and recorded content. A tree, ring, or bus configuration may be used to connect the group of homes and server 1150.

In a home network, a user may wish to record television programming from any given user equipment device and view the recorded programming from another user equipment device located on the home network. For example, the user may access an interactive media guidance application implemented on user equipment located in the living room to record "American Idol". After the recording is completed, the user may access an interactive media guidance application implemented on user equipment located, for example, in the bedroom to access and view the recording of "American Idol".

However, the display and recording capabilities of the user equipment devices may differ. As a result, some user equipment devices in the home network may not be able to display content recorded by other user equipment devices in the home network. For example, a cellular phone and a high-definition digital video recorder may be part of two separate user equipment devices in a home network. The cellular phone cannot display recordings having a resolution greater than 160 x 100 pixels. Therefore, the cellular phone cannot display, for example, a recording of a high-definition television program on the digital video recorder. In addition, the cellular phone may also lack the bandwidth to download the high-definition recording in a reasonable amount of time.

In addition to supporting different resolutions and having different bandwidths, other capabilities that may differ among user equipment devices in a home network may include, for example, the types of media supported by the user equipment devices, the processing power of the user equipment devices, the ability of the user equipment devices to decode various video and audio formats, and any other suitable capabilities.

The present invention provides systems and methods for providing content, for example, interactive content or media content, for use in one or more home networks. Some of the interactive content may be provided in a "New to Me" context, which may identify content that has been previously viewed or recorded, or which may present information or otherwise perform an action based on identifying previously viewed content, in a flexible manner that optimizes a user's program guide and viewing experience. It may be especially important to keep track of and manage previously viewed content in a home network environment, where users typically interact with multiple different user devices in the home network on a regular basis. Management of content may be performed at different levels of specificity. In one embodiment of the invention, content may be managed at an individual level or at a device level within a particular home network. In another embodiment of the invention, content may be managed at the household level, or across multiple home networks. In yet another embodiment of the invention, content may be managed across multiple home networks, but with respect to an individual or a user device. Each of these aspects are discussed in further detail below, but in order to facilitate an understanding of the various embodiments, several terms, all of which are applicable to various embodiments of the present invention, are discussed first. A few of these terms include viewing history, interactive content, and media content.

The viewing history may represent a history of viewed, played, or displayed content. More particularly, viewing history, as defined herein includes, but is not limited to, a compilation of content that has been displayed, viewed, or played on at least one user device that is communicatively coupled to a home network. In other words, the viewing history is akin to logbook or profile that keeps track of content that has been viewed, played, recorded, or any combination thereof for a particular individual, device, or home network. Thus, a viewing history may be provided for individuals, user devices, and home networks.

The viewing history may provide a framework or guidelines that enables the interactive media guidance application to manage content. For example, if content is managed at the individual level, a viewing history may be specifically maintained for each individual that interacts with a device communicatively coupled to a home network. When a particular user accesses various user devices communicatively coupled to the home network, the interactive media guidance application may access the viewing history for that particular user to determine the content to be provided to the user device being used by that user. As another example, a viewing history may be maintained for a selected device that is communicatively coupled to a home network. In yet another example, a viewing history may be maintained for one or more home networks, or for an individual or device that is maintained across two or more home networks.

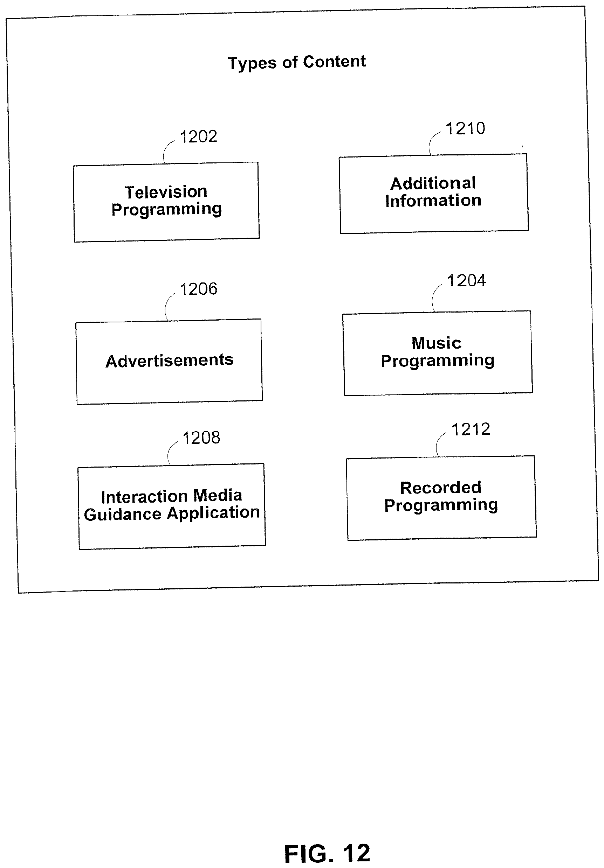

FIG. 12 shows several different types of content (also referred to as media content) that may be monitored for creating, modifying, or updating a viewing history in accordance with the principles of the present invention. As shown, FIG. 12 includes television programming 1202, music programming 1204, advertisements 1206, interactive media guide application content 1208, additional information 1210, and recorded programming 1212. Television programming 1202 may include content such as broadcast programming, recorded programming, pay-per-view programming, video-on-demand programming, near video-on-demand programming, streaming media programming, Internet accessible programming (e.g., programming that may be downloaded from the Internet or a website), or any other suitable television programming. Music programming 1204 may include music programming such as satellite radio, Internet radio, stored music files (e.g., .mp3 or .wav files), or any other music programming. Advertisements 1206 may include advertisements that are displayed as part of television programming viewed by a user (e.g., displayed at the beginning, middle, and/or end of the programming) or by interactive media guide applications in, for example, an overlay, a flip or browse overlay, a full screen overlay, a partial screen overlay, in an advertisement window or region, or as a banner advertisement, a targeted advertisement, a channel advertisement, a pop-up advertisement, an interactive advertisement, or any other suitable advertisement. Interactive media guidance application content 1208 may include, for example, a listing of programming, media guide display screens, a listing of recorded programming, or any other suitable interactive media guide content. Additional information 1210 may include, for example, any information from the Internet not previously described, or information stored in databases or servers accessible by the interactive media guidance system. Recorded programming 1212 includes any type of programming that has been recorded on physical media. It is understood that the various types of content shown in FIG. 12, and the discussion accompanying each type of content, that may be monitored for creating or updating a viewing history is not exhaustive, and that other types of content (e.g., media) not specifically discussed herein, or has yet to be developed, may be monitored.

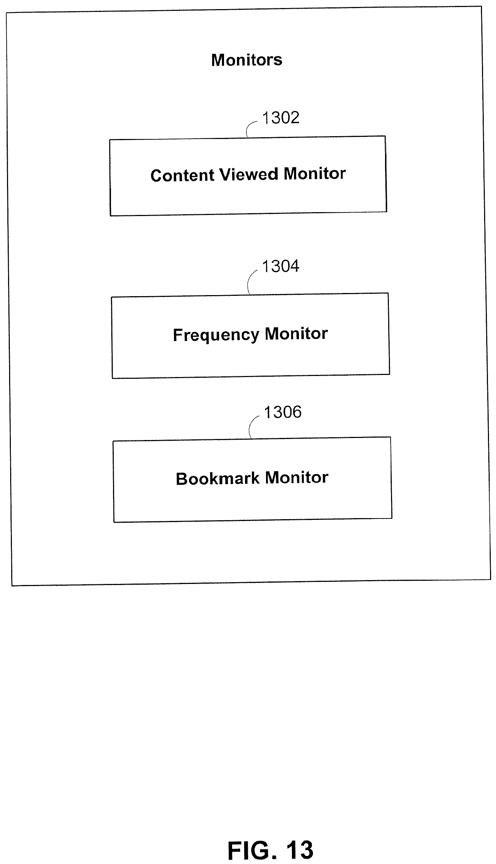

FIG. 13 shows several monitors that may be used to track various aspects of the viewed or played content. Content viewed monitor 1302 may monitor which content (e.g., any of the content discussed above in connection with FIG. 12) has been viewed. For example, if the first season, fourth episode, of "Family Guy" is viewed, viewed content monitor 1302 may update the viewing history to reflect the fact that this particular episode of "Family Guy" has been viewed. If a particular advertisement is displayed, for example, by the interactive media guidance application, viewed content monitor 1302 may update a viewing history to reflect the fact that this particular advertisement has be displayed. Viewed content monitor 1302 may designate content as being viewed when at least a predetermined portion of the content has been viewed. For example, if a majority of the content (e.g., at least half of the length of the content) has been viewed, the content may be marked as having been viewed. Note that the predetermined viewing portion may vary depending on the type of content being viewed. For example, a user that begins playing a video-on-demand program, but stops play five minutes into the program (because he or she did not like the program) may result in monitor 1302 deeming this program as having been viewed. If desired a timestamp, indicating a date or time the content was last viewed may be stored in the viewing history.

Frequency monitor 1304 may monitor the number of times particular content has been viewed. For example, the number of times a television program or advertisement is viewed may be stored in the viewing history. In other approaches, frequency monitor 1304 may monitor the number of times a user requests or views, for example, previews or supplemental information such as information blurbs on various programming may be recorded in a viewer history.

Bookmark monitor 1306 may keep track of the program (e.g., television program) being viewed or a location in a program (e.g., a video-on-demand or a recorded program) being viewed when the user paused or stopped play. The following example illustrates a use of bookmarked information. Assume that a user is watching a recorded program on user equipment located in a first room, but stops play of the recorded program. The point at which the recorded program is stopped may be bookmarked. Further, assume that the user interacts with user equipment in the second room. The bookmark may enable the user equipment in the second room to resume play of the recorded program at point at which the user stop playback in the first room.

In some embodiments, in addition to or instead of creating or updating the viewing history using, for example, one of the monitors discussed above, the interactive media guidance application may allow a user to manually create or update a viewing history. For example, the interactive media guidance application may provide one or more display screens that allows a user to specify a viewing history for an individual, a device, or a home network. The display screens may be accessible from an option in a menu provided by the interactive media guidance application that the user may navigate to and select. In other embodiments, a user may be allowed to enter in the content they have viewed, or that they have little or no interest in viewing, at a site that is remote from the home network, but is communicatively coupled to the interactive media guidance system. For example, the user may create or update a viewing history on a website. At the website, the user may specify that they have seen all of the episodes of the first two seasons of the television series "24", or that they have viewed certain episodes of the show "Seinfeld." The user may also describe, among other things, the date that they last viewed specified content, or the frequency with which they have viewed specified content. After the information has been entered, it may be downloaded and incorporated into or supplant an existing viewing history.

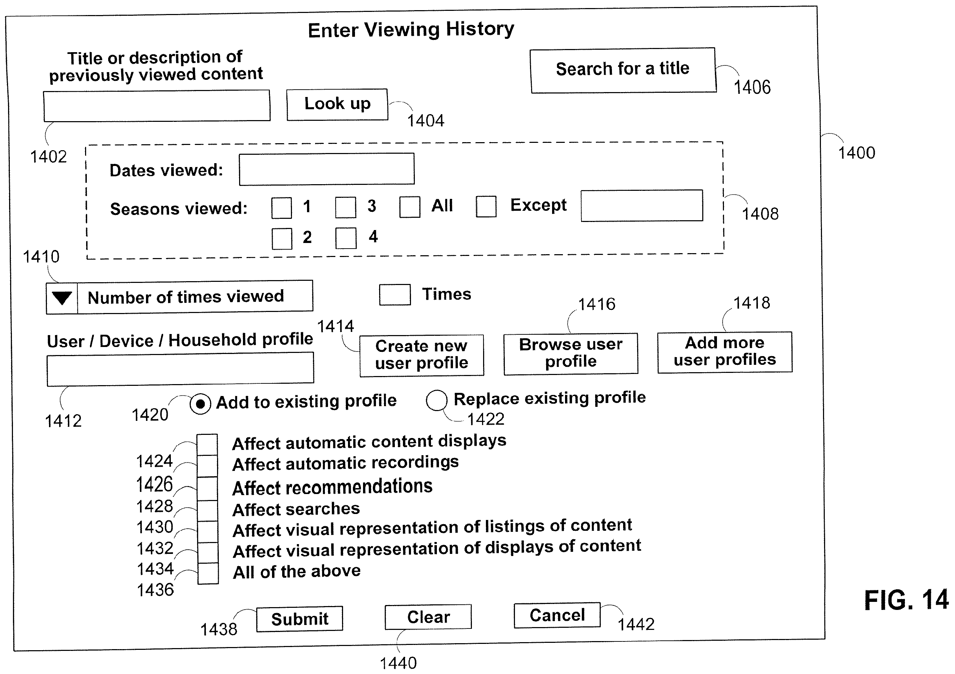

FIG. 14 shows an illustrative screen 1400 provided by an Internet website in which users may manually specify their viewing history. Generally, allowing a user to manually specify or update certain components of their viewing history may be important to more accurately reflect their complete viewing history that has not automatically been captured by the interactive media guide application. This may be necessary for the entry of, for example, programming that a viewer watched prior to the installation of the interactive media guide application, or programming that a viewer watches in an environment outside of the interactive media guide application. Returning to FIG. 14, it will be understood that screen 1400 may also be provided locally by the interactive media guidance application. First, the user may specify a title or description of the previously viewed content in text field 1402. Aides such as an on-screen keyboard or voice dictation may be provided to assist the user in entering in this information into text field 1402. After entering in the title or description of the previously viewed content, the user may select button 1404 to look up the entered content in a database of all the available content. The interactive media guidance application may present either the content that matches the entered information, or a number of the closest matches, to the user in one or more additional screens. The user may then select the appropriate content, and that content may then be displayed in a format recognizable by the interactive media guidance application in text field 1402.

Alternatively, if the user is not familiar with the title or the description of the previously viewed content, the user may select button 1406 to search for content. In response to the selection of button 1406, the interactive media guidance application may provide the user with one or more screens for specifying various parameters or criteria for the previously viewed content. For example, the user may be provided with the opportunity to specify the genre of the content (which may be divided into a category and subcategory, such as movies and drama, television show and sitcom, sports and baseball, or advertisement and car commercial), the date the content was viewed, the channel on which the content was viewed, or additional qualifiers that further narrow the content (e.g., rating, actors). After the parameters are entered, the interactive media guidance application may perform a search based on the entered parameters and provide the user with an opportunity to select from the content that matches the entered parameters.

After identifying the previously viewed content, the user may have an opportunity to provide further details about the previously viewed content. For example, the user may enter in selection area 1408 the dates that the content was viewed (for determining the exact episodes of a television series that the user viewed), or the seasons that the content was viewed. Using drop-down menu 1410, the user may specify, among other things, how many times the content was viewed, how often the content was viewed (e.g., twice in the past week), the date the content was last viewed, how much of the content the viewer viewed (information that may be used by the bookmark monitor), etc.

When the user has specified the details about the previously viewed content, the user may specify the profile that should be updated by the manually entered previously viewed content. To do this, the user may type in the name of the user, device or household into text field 1412. If the user wants to make the manually entered content part of a new profile, the user may select button 1414. In response to selection of button 1414, the interactive media guidance application may prompt the user to enter in the name of the new profile, as well as any additional information associated with the new profile. The user may also select button 1416 to browse the available profiles and select the appropriate one. If the user wishes to update multiple profiles based on the entered information regarding previously viewed content, the user may identify a first profile, and then select button 1418 to add more user profiles. In response to selection of button 1418, the interactive media guidance application may prompt the user to enter in names of the additional profiles by direct entry or browsing the database of profiles.

After selecting in the desired profile or profiles to be affected by this information, the user may further specify whether the manually entered viewing history should be incorporated with the existing viewing history associated with the selected profile or profiles, or should replace the viewing history for the selected profile or profiles. If the user selects radio button 1420, the interactive media guidance application may add the entered viewing history into the existing viewing history for the selected profile or profiles. If the user selects radio button 1422, the interactive media guidance application may replace the existing viewing history for the selected profile or profiles with the entered viewing history.

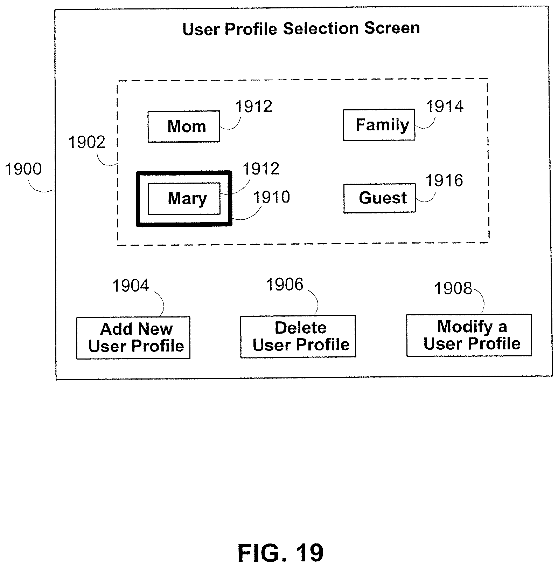

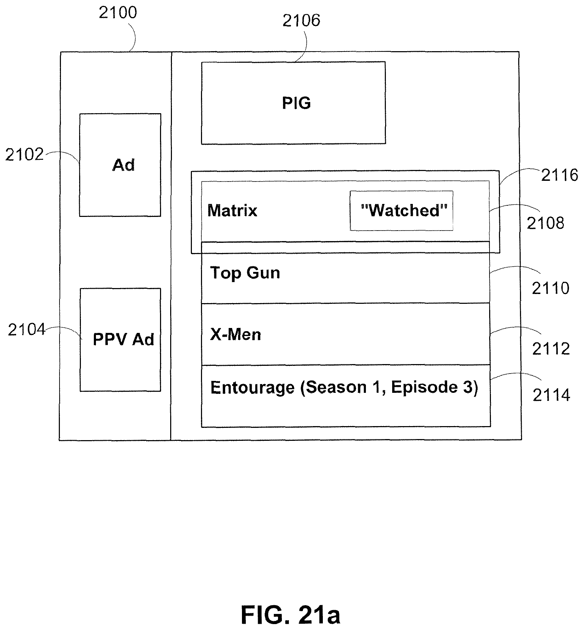

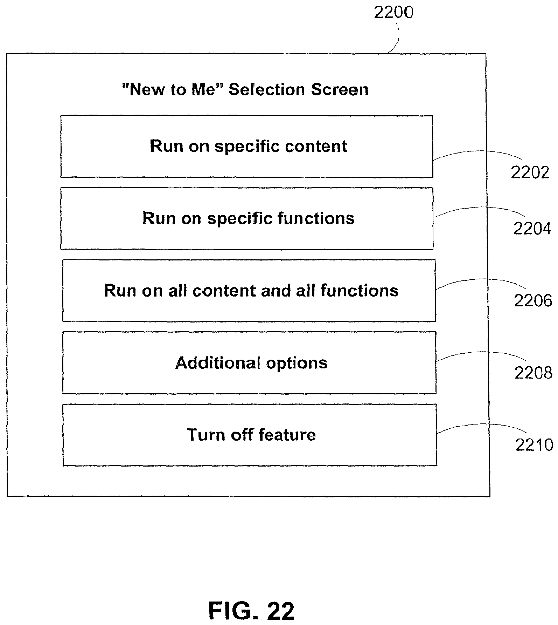

The user may be provided with the opportunity to select how the manually entered content should affect different interactive content displays or functions provided by the interactive media guidance application where the "New to Me" feature is applicable. If the user selects checkbox 1424, the interactive media guidance application will take the manually entered viewing history into consideration in automatically generated displays of content (i.e., the manually entered content, such as advertisements or programming, will not be automatically displayed to the viewer). If the user selects checkbox 1426, the interactive media guidance application will take the entered viewing history into consideration in automatic recording operations (e.g., in connection with the recording of a season of a television series). If the user selects checkbox 1428, the interactive media guidance application will take the entered viewing history into consideration when presenting recommendations. If the user selects checkbox 1430, the interactive media guidance application will take the entered viewing history into consideration when presenting search results. If the user selects checkbox 1432, the interactive media guidance application will take the entered viewing history into consideration when displaying visual indicators for listings of previously viewed or unviewed content, as will be discussed below in connection with FIGS. 19A-G. If the user selects checkbox 1434, the interactive media guidance application will take the entered viewing history into consideration when displaying visual indicators for displays of previously viewed or unviewed content, as will also be discussed below in connection with FIGS. 21A-H. If the user wishes to select all of the above options, the user may select checkbox 1436. If the user does not select any of checkboxes 1424-1436, the interactive media guidance application may apply the entered viewing history to the same functions specified for the existing viewing history, or according to a default rule, which will be described in connection with FIG. 22.

When a user has entered in the viewing history and the other above-described details concerning it, the user may submit this information to the website by selecting submit button 1438. The user may also clear the entered information, or cancel out of the function to enter a viewing history completely, by selecting clear button 1440 or cancel button 1442, respectively. Once the information has been submitted, it is processed, and the viewing history details and corresponding instructions, such as the interactive media guidance applications functions that should be affected by the entered viewing history, are transmitted in an appropriate format to the appropriate interactive media guidance system or systems. Alternatively, if the feature of manually entering a viewing history is provided by a local interactive media guidance system, the local interactive media guidance application may process and format the information and transmit it directly to the appropriate interactive media guidance system or systems.

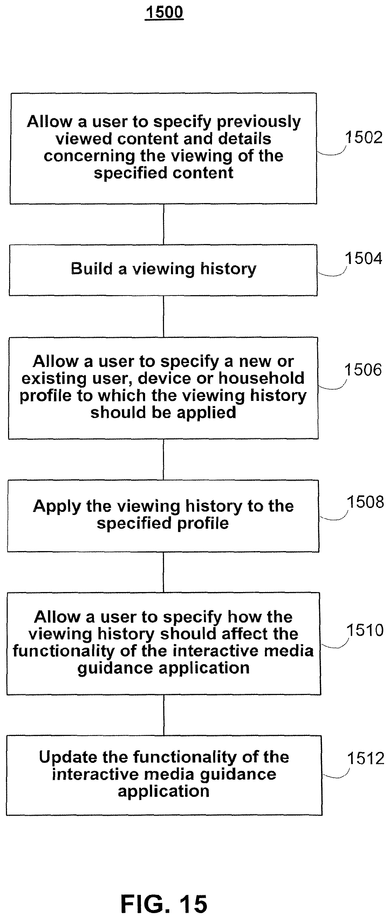

FIG. 15 shows illustrative flow diagram 1500 for allowing a user to manually enter a viewing history of previous viewed content in accordance with the principles of the present invention. First, at step 1502, the interactive media guidance application allows a user to specify previously viewed content and details concerning the viewing of the specified content. At step 1504, the interactive media guidance application compiles a viewing history based on the information entered in by the user at step 1502. At step 1506, the user specifies a new or existing user, device or household profile to which the viewing history should be applied. At step 1508, the interactive media guidance application applies the viewing history specified at step 1502 to the profile specified at step 1506. At step 1510, the user specifies how the viewing history should affect the functionality of the interactive media guidance application. At step 1512, the interactive media guidance application updates its own functionality for the profile specified at step 1508 according the specification by the user at step 1510. More generally, it will be understood that steps 1504, 1508 and 1512 may occur after the user has submitted the information in steps 1502, 1506 and 1510 by, for example, selecting submit button 1438 in FIG. 14.

The viewing history may be stored on one or more databases, which may be either or both locally or remotely accessible by the user devices and/or home networks. In addition, as will be discussed in more detail below, profiles such as user profiles, device profiles, and/or home network profiles may also be stored on databases.

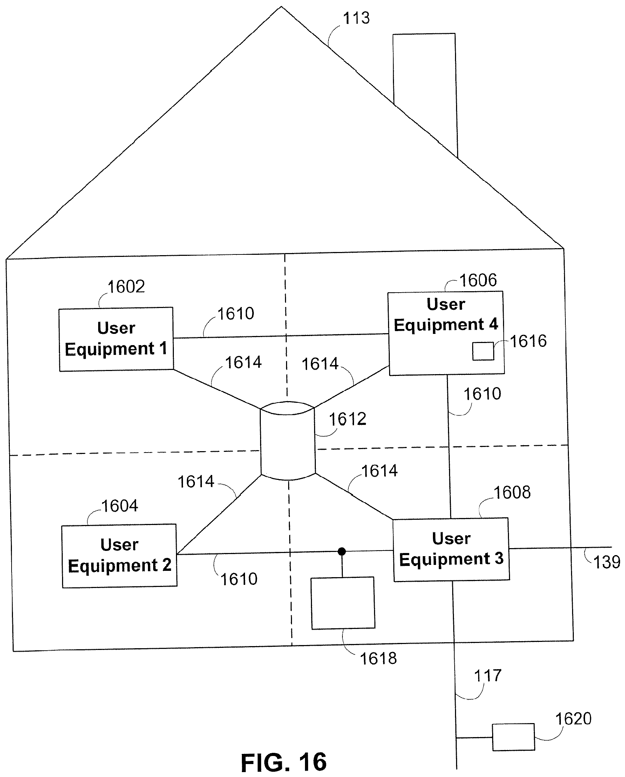

FIG. 16 is an illustrative block diagram of an illustrative home network 113 that shows user equipment devices 1602, 1604, 1606 and 1608 each being directly connected to a database 1612, which may store, among other things, viewing history data. Although a home network topology similar to that discussed in connection with FIG. 8a is being used to discuss a database that may store viewing history data, it will be understood that other home network configurations or topologies may be used such as those discussed in connection with FIGS. 8b-c, 9, 10, and 11. User equipment devices 1602, 1604, 1606 and 1608 may send viewing history data to and receive the same from the same database server via communication paths 1614, which may be any suitable communications path for in-home networks, such as wired paths, cable paths, fiber-optic paths, wireless paths, or a combination of such paths. The connection between and database 1612 and user devices 1602, 1604, 1606, and 1608 illustrates that the viewer history data is accessible by user devices communicatively coupled to the home network. Such accessibility may ensure that all user devices are properly configured to manage content according to, for example, a particular individual, a selected device, or home network.

Moreover, it will further be understood that FIG. 16 shows storing viewer history data for a given home network in a single database on a single, local, standalone server, which is accessible by all the user equipment devices in the home network is merely illustrative. A wide range of alternative arrangements exist for viewer history data. For example, the database may be stored at one of the user equipment devices in the home network (shown as database 1616); the database may be communicatively coupled to the home network as shown with database 1618, or it may be located in a remote location outside of the home network as shown with database 1620 (e.g., at a user equipment device or server within a different home network, at a distribution facility, a server, etc.). In other embodiments, the database may be split up or duplicated for redundancy or added performance, and distributed among any permutations of the previously described locations, or at other suitable sites for hosting such information, in any suitable manner. In addition, the database may, for example, be accessible by only a subset of the user equipment devices in the home network, either because the other user equipment devices lack a communicative coupling to the database, or because those other user equipment devices lack the proper authorization to access the particular database, user profile, or viewing history of interest. In those instances, the user equipment devices that do not have direct access to the database may establish communicative links with user equipment devices that can access the database.

The content may be identified using unique identifiers such as strings or numbers that are stored by the interactive media guidance system when the content is viewed by the user. In other embodiments, the interactive media guidance application may store the identifiers for all the content that a particular user has not previously viewed.

The interactive media guidance application may store viewing history in any number of ways. In some embodiments, when the viewer history of interest is stored at a location other than at the user equipment device in use, the user equipment may download and retain a locally cached copy of the viewing history. The interactive media guidance application may then make modifications to the viewing history of the locally cached copy and then upload the updated viewing history to the externally located database at predefined intervals, on demand (e.g., in response to a request to furnish such information) or in response to a user action (e.g., logging out of the user equipment device), or by any other approach.

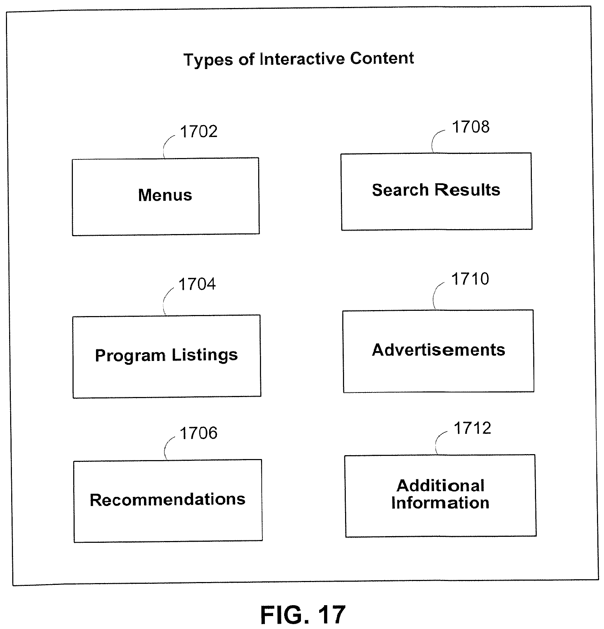

FIG. 17 shows several different types of interactive content that may be generated and displayed by the interactive media guidance application. As shown, FIG. 17 includes menus 1702, program listings 1704, recommendations 1706, search results 1708, advertisements 1710, and additional information 1712. Menus 1702 may include textual menus that enable users to navigate the various functions provided by the interactive media guidance application. Program listings 1704 may include display of available programming of any of the types previously mentioned. Such listings may be organized, for example, by channel, by date, by genre, by user-specified criteria, or by any other suitable manner. Recommendations 1706 may include any displays of recommendations by the interactive program guidance application to a user of available programming or other content for viewing or recording. Search results 1708 may include results of searches that are conducted by users, or automatically performed by the interactive media guidance application for available content. Advertisements 1706 may include the types of advertisement 1206 described in connection with FIG. 12. Finally, additional information 1712 may encompass any of type of information generated by the interactive media guidance application and not described above.

Content management at the individual level is now described. Managing content on an individual basis within a home network may enable the media guidance system to provide interactive content that is specific to each user regardless of which user device the user uses. Individualized content management offers many advantages that enhance a particular user's media guidance application experience. For example, when a first user views a particular program (e.g., a television show) in the living room, the system may update a viewing history for the first user, to reflect the fact that the first user has viewed that particular program. Thereafter, when the first user retires to the bedroom (or any other room having a user device communicatively coupled to the home network), and decides to watch another program, the system may omit the listing of the particular program that the first user viewed in the living room from a listing of programs that may be displayed on a user device in the bedroom. By contrast, if a second user accesses the user device in either the living room or the bedroom and has not viewed the particular program viewed by the first user, the system may display the particular program in a listing for the second user. It is understood that the references to living room and bedroom are merely illustrative and are not intended to be limiting. It is further understood that the system is not required to omit the particular program from a listing of programs, but that this is one of many different ways in which content can be displayed. For example, the particular program listing may be "specially" presented to indicate that the particular program has been viewed by the first user or additional information (e.g., information indicating the particular program was date last viewed) may be displayed in connection with the particular program listing. Additional examples for different ways content may be displayed are discussed in connection with the description accompanying FIG. 17.

Another advantage of individualized content management may be applied to settings or preferences. For example, any settings a particular user sets at any of the user devices can automatically be applied to all user devices coupled to the home network. Thus, there is no need for the particular user to manually define any desired settings for each user device coupled to the home network. Moreover, whenever the particular user changes a setting on one of the user devices, the updated settings may be applied to all user devices without requiring additional user input. Such settings may be stored, for example, as part of a user profile. It is noted that the viewing history, which may include settings, may be stored as part of a user profile.

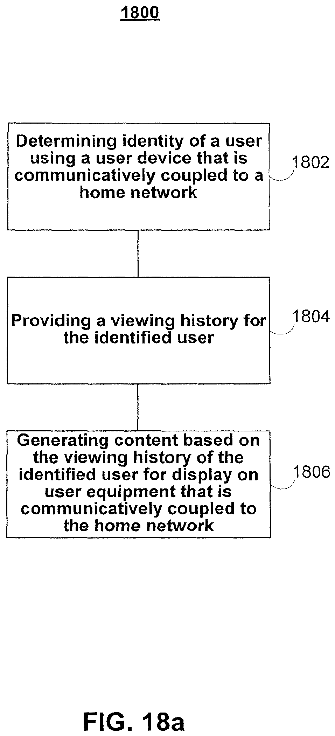

FIG. 18a shows illustrative flow diagram 1800 for displaying interactive or media content based on the viewing history for an identified user using a user device communicatively coupled to a home network. At step 1802, the identity of a user using a user device communicatively coupled to a home network is determined. In one embodiment, the identity of a user may be determined when the user selects a user profile. Referring briefly to FIG. 19, an illustrative user profile selection screen 1900 is shown. Display screen 1900 may be displayed in response to the selection of a button or buttons on a remote control or by navigating a highlight in an interactive media guidance application means to select an option that causes screen 1900 to be displayed. Screen 1900 may include user profile selection area 1902, user profile create button 1904, user profile delete button 1906, and user profile modify button 1908. It is understood that the contents of screen 1900 are merely illustrative and that additional buttons and other selectable features may be added, and that various features may be omitted.

User profile selection area 1902 may include a highlight region 1910 and user profile buttons 1912, 1914, and 1916. User profile buttons 1912 correspond to user profiles created for a particular individual (shown as Mom and Mary). User profile button 1914 corresponds to a user profile created for a group of individuals (shown as Family). For example, a group profile may be selected when both Mary and Mom are viewing programming. User profile button 1916 corresponds to an anonymous or guest user (shown as Guest). For example, button 1916 may be selected when a user does not have a profile or wishes to view programming without having his or her interactions with the media guidance application monitored as part of a specified individual or group profile. The interactive media guidance application may allow the user to navigate highlight region 1910 to one of user profile buttons 1912, 1914, and 1916 and select the highlighted user profile button. When the user selects one of the user profile buttons 1912, 1914, and 1916, the identity or identities of the user or users, or whether the user is anonymous, is determined.

The interactive media guidance application may further allow the user to navigate highlight region 1910 to user profile create button 1904, user profile delete button 1906, or user profile modify button 1908, and if desired the user may select a highlighted button. Selection of user profile create button 1904 may cause the interactive media guidance application to display one or more setup screens for the purpose of creating a new user profile. Selection of user profile delete button 1906 may cause the interactive media guidance application to delete a specified user profile that has been created. In some embodiments, in response to the selection of the user profile delete button 1906, the interactive media guidance application may position highlight region 1910 on one of user profile buttons 1912 in user profile selection area 1902 to allow the user to select the user profile that the user would like to delete. Selection of user profile modify button 1904 may cause the interactive media guidance application to display one or more setup screens for the purpose of modifying an existing user profile.

Referring back to FIG. 18a, an identification system may be used in addition to, or in lieu of, the user profile selection screen 1800 to perform step 1802 of determining the identify of the user. An identification system (e.g., system 620 of FIG. 6) may enable the interactive media guidance application to intelligently identify the user or users using the user device communicatively coupled to the home network. For example, the identification system may perform fingerprinting, retinal or thermal scanning in order to determine the user and load the corresponding user profile.

At step 1804, the viewing history of the identified user is provided. As discussed above, the viewing history may be stored on a database that is communicatively coupled to a user device being used by the identified user. If desired, the viewing history may be stored in a user profile associated with the identified user and it is the user profile that is stored on the database. In some embodiments, the user profile and/or viewing history information for a user may be made publicly or privately available to some or all user equipment devices within or outside of a home network.

The interactive media guidance system may identify all the user equipment devices in a home network or elsewhere that are using the same user profile in order to provide up-to-date information on the viewing history of the identified user. In some embodiments, for example, an interactive media guidance application at a user equipment device on which a user has logged in (e.g., selected a user profile) or has been identified by an identification system may make a determination as to which, if any, user equipment devices in the home network are using the same user profile, and then proceed to communicate directly with those user equipment devices. In other embodiments, whenever the one or more databases for storing viewing history data and/or user profiles receive updated data, the database or databases may automatically communicate the entire updated viewing history and/or user profile, or only the updated portion of the viewing history and/or user profile to those other user equipment devices having viewing history data and/or user profile data for the identified user.

At step 1806, interactive content is generated based on the viewing history of the identified user for display on user equipment that is communicatively coupled to the home network. Interactive content generally refers to any type of display screen or series of screens such as menus, prompts, listing of programming, etc., that are generated by the interactive media guidance application and that either prompt or are the result of user interaction. In some embodiments, for example, the interactive media guidance application may generate (based on the viewing history) a listing of programming in which the media content (e.g., television programming) that the identified user has previously viewed, or at least has identified as being viewed, from the list. The listing may be a favorites listings, a recommendation listing, or a search results listing of programming.

The various parameters or monitors for a viewing history may be further used in the determination of whether to display previously viewed content. If desired, the interactive media guidance application may define or allow the user to define thresholds for determining whether programming or other content should actually be displayed even though it has been previously viewed. For example, a user may instruct the interactive media guidance application not to remove content from generated displays of interactive content unless, for instance, the content was viewed before a specified date or viewed within a range of dates, or unless the content was viewed at least a specified number of times or within a range of times. In other embodiments, the interactive media guidance application may define or allow the user to define a set of weighted criteria, including whether the user has previously viewed the media content, for determining whether to remove the previously viewed content from displayed interactive content.

The feature of removing from displays of interactive content the media that the user has previously viewed has numerous applications. For example, an interactive media guidance application may use the information regarding the media content that a user has already viewed to modify the list of programs that it may actively recommend a user to watch or record on the basis of, among other things, preferences that have been specified by the user. In other embodiments, the interactive media guidance application may remove from a search conducted by the user for particular media content or categories of media content the media that the user has previously seen. In still other embodiments, the interactive media guidance application may, automatically or in response to user input, filter and remove from displays of program listings of future programming the media content which the identified user has previously viewed.

In yet other embodiments, the interactive media application may provide results of a search including only the programming the user has not seen. For example, if the user searches for content on Lucille Ball and the entire "I LOVE LUCY" collection (e.g., all 300 episodes) is available on a VOD server, the media application may display listings for the programs the user has not seen. That is, the media application may not display all 300 episodes if the user has seen, for example, 230 of them. More generally, it will be understood that the interactive media guidance application may remove any type of content from any of the types of interactive content defined in FIG. 17 if the content has been previously viewed.

It will be understood that the above-described embodiment of the present invention may be applied to various home network environments. In one illustrative example, a user who has viewed television programming at a user equipment device in one room of their home may not be interested in viewing the same programming again, regardless of the user equipment device which the user is using. To solve this, the present invention allows the user to simply create a user profile for himself or herself, and then select the user profile at any user equipment device in the home network prior to using the user equipment device.

Besides using a user's viewing history to remove previously viewed media content from displays of interactive content, the interactive media guidance application may remove previously viewed media content from displays of media content, as in specified in step 1806 of FIG. 18a. In some embodiments, advertisements (e.g., commercials) or other forms of promotional media, such as previews of television programs or movies, that a given user has already seen may be suppressed from display and substituted with advertisements that the user has not yet seen. As a result, this feature may help advertisers better attract potential buyers of their products. One scenario in which this feature may be particularly beneficial is with serial advertisements, which are a set of advertisements that, when strung together, are designed to tell a story. Such advertisements may be played sporadically and not in any particular order. By presenting a user with only those advertisements that he or she has not previously seen, then, the interactive media guidance application helps viewers to view all of the different individual advertisements within a given set of serial advertisements, and thus be able to piece together the underlying storyline behind the advertisements.

The interactive media guidance application may provide further support for situations where a user decides to operate a user equipment device in a home network without first selecting a user profile. Some users may not want to go through the burden of choosing a user profile prior to using the user equipment device. In such cases, the interactive media guidance system may, for example, add the programs that the anonymous user has viewed to the viewing history of all of the stored user profiles for the home network. In other embodiments, the interactive media guidance system may provide one or more setup screens for handling the viewing history of anonymous users. The setup screens may provide options that allow a user to specify explicitly those user profiles that are to include the viewing history of anonymous users.

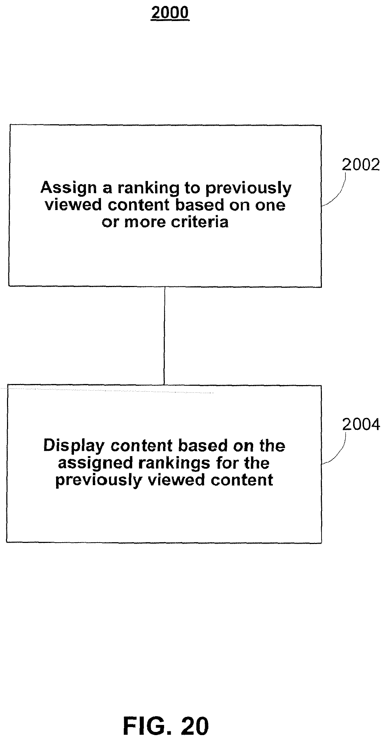

In some embodiments, the interactive media guidance application may generate displays of previously viewed content using predetermined criteria. For example, the interactive media guidance application may rank previously viewed programs and display the programs based on their ranking. A more detailed discussion of ranking is discussed below in connection with FIG. 20.

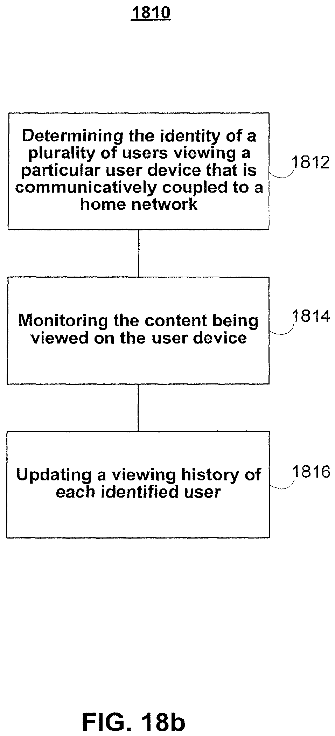

In some embodiments, the interactive media guidance application may support identification of multiple users viewing a user device that is communicatively coupled to a home network. FIG. 18b shows illustrative flow diagram 1810 of an embodiment that supports multiple user identification in accordance with the principles of the present invention. Beginning at step 1812, the identity of a plurality of users viewing content on a particular user device that is communicatively coupled to a home network is determined. The identity of the users may be determined based on selection of multiple user profiles or by an identification system (e.g., identification system 612 of FIG. 6). At step 1814, the content (e.g., television programming) being viewed on the user device is monitored. At step 1816, a viewing history of each identified user is updated. Such updating enhances content management for each user because the viewing history for each user now reflects the fact that the particular program has been viewed by the identified users. For example, after a group of users watch a recording of the movie "When Harry Met Sally," a future generated list of recorded programming may not display the "When Harry Met Sally" program listing.

Content management at the user device level is now described. Managing content on a user device level within a home network may enable the media guidance system to provide interactive content that is based on the content viewed at a selected user device. In one embodiment, a selected user device may be treated as the master and the other user devices be treated as slaves. In a master/slave arrangement, the viewing history may be created, modified, or updated based on the content viewed at the master user device. Thus, the interactive content generated for display on both the master and slave devices is based on the viewing history of the master user device.

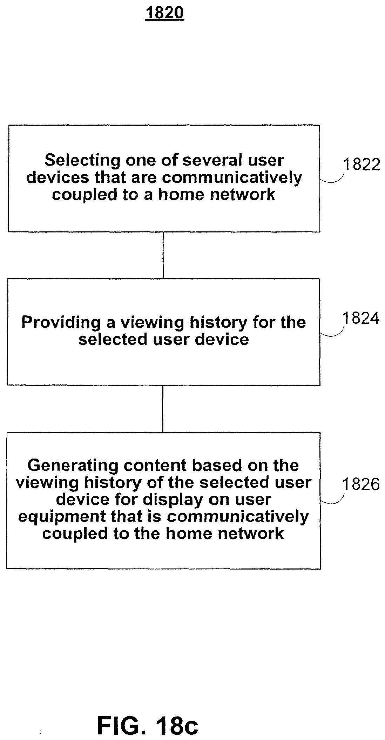

FIG. 18c shows flow diagram 1820 to illustrate content management at the user device level in accordance with the principles of the present invention. At step 1822, one of several user devices that are communicatively coupled to a home network is selected. For example, the interactive media guidance application may allow the.user to select a desired user device by selecting a user device profile. As another example, hardware protocols (e.g., bios settings) may be configured to select a particular user device. At step 1824, a viewing history for the selected user device may be provided. At step 1826, the interactive media guidance application may generate interactive content based on the viewing history of the selected user equipment for display on user equipment communicatively coupled to the home network.

Content management at the home network level and across multiple home networks is now described. Managing content on a home network level enables the media guidance system to provide interactive content that is based on the content viewed at any one of several user devices communicatively coupled to a home network. In this arrangement, whenever an item of programming is viewed on a user device that is communicatively coupled to the home network, that program may not be presented in a listing of programming on that particular user device, nor any other user device that is communicatively coupled to the home network. It will be understood that this arrangement can be contrasted to the master/slave arrangement as discussed above in connection with FIG. 18c. In fact, this arrangement is akin to master/master relationship, where each user device communicatively coupled to the home network may manage content. For example, assume that a home network is communicatively coupled to three different user devices. If "Superman" is viewed on a first user device, a viewing history for the home network may be updated to reflect this viewing event. Thus, none of the user devices may display "Superman" in a listing of programming. If "Wonderwoman" is viewed on a second user device, the viewing history for the home network is updated to reflect this viewing event. Again, none of the user devices may display "Wonderwoman" in a listing of programming.

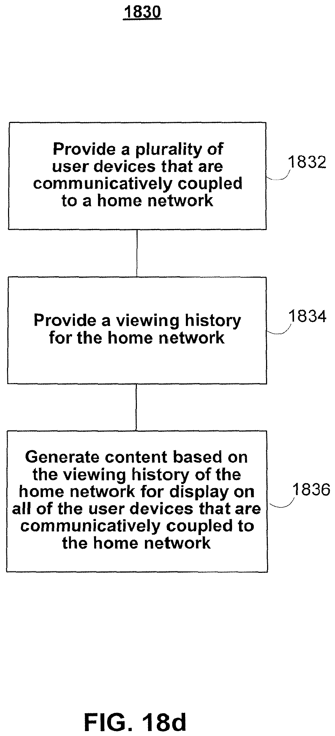

FIG. 18d shows illustrative flow diagram 1830 managing content based on the viewing history at home network. At step 1832, a plurality of user devices that are communicatively coupled to a home network is provided. At step 1834, a viewing history for the home network is provided. At step 1836, interactive content based on the viewing history of the home network is generated for display on all of the user devices that are communicatively coupled to the home network.

Managing content across two or more home networks may enable the media guidance system to provide interactive content that is based on the content viewed at a selected home network or viewed at each home network. For example, a user may have a first home network (e.g., located at his or her house) and a second home network (e.g., located at his or her vacation house). In one embodiment, which assumes that the first home network is the selected home network, any item of programming that is viewed at the first home network may not be presented in a listing of programming at the second network. In another embodiment, assuming that none of the home networks are selected, any item of programming viewed at the first network may not be presented in a listing of programming at the second network, and any item of programming viewed at the second network may not be presented in a listing of programming at the first network.

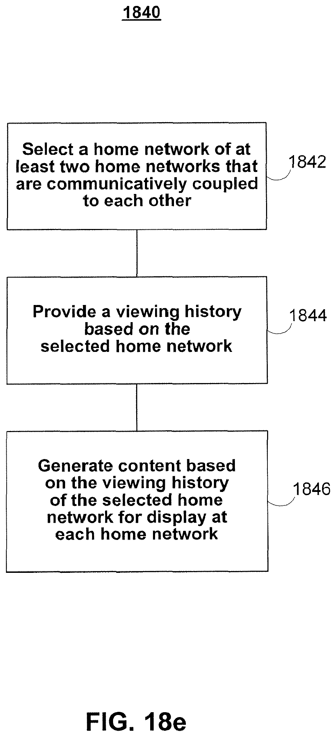

FIG. 18e shows illustrative flow diagram 1840 for displaying interactive content based on the viewing history of a selected home network in accordance with the principles of the present invention. At step 1842, a home network is selected out of at least two home networks that are communicatively coupled to each other. At step 1844, a viewing history is provided based on the selected home network. At step 1846, interactive content based on the viewing history of the selected home network is generated for display at each home network.

It is understood that in cross-coupled home network arrangements (e.g., see FIGS. 11c and 11d), a selected user device or an identified user may determine the interactive content that is generated for display for user devices communicatively coupled to the cross-coupled home networks.

The foregoing discussion of managing content across multiple home networks illustrates the ability to share a viewing history for a particular home network with external user equipment devices or home networks. This concept may extend to the user-level and device-level aspects of the present invention as well. For example, a user at a user equipment device that is outside of a home network may still access the profile for a particular user or device within the home network, provided that the user equipment device is communicatively coupled to the home network. In this manner, a user spending time at their vacation house may access a user or device profile from their regular house, which may have a more complete viewing history for the user and therefore be more desirable.

FIG. 20 shows illustrative flow diagram 2000 for displaying ranked interactive content based on a predetermined criteria that is applied to previously viewed programming. At step 2002, the interactive media guidance application may assign rankings to some or all of the previously viewed media (e.g., an episode of a television series, a movie, or an advertisement) based on one or more criteria. In some embodiments, the interactive media guidance application may rank previously viewed media on the sole basis of when the media was last viewed. In other embodiments, the interactive media guidance application may assign a cumulative ranking to each previously viewed media based on a number of criteria that may include when the media was last viewed, how frequently the media was viewed, and any particular preferences that the user has specified for the media. The criteria may be weighted in determining the ranking for the particular media that has been previously viewed. Parameters such as the different criteria for determining the ranking of previously viewed media, whether or not they are weighted, the particular weightings for each of the different criteria, and the specific media or types of media to actually apply the ranking to may be preset by the interactive media guidance application in an optimized fashion, or may be customized by the user and for each user profile, using for example a display screen provided by the interactive media guidance application for specifying such settings.

After rankings have been applied to the previously viewing media, the interactive media guidance application may, at step 2004, display interactive content or media content based on the assigned rankings. By default, unviewed content may be ranked higher than previously viewed content. In some embodiments, previously viewed media content that was more recently viewed or that has been viewed more often, for example, may be ranked lower, and as a result may be less likely to be displayed, or may be displayed lower in a ranked list of interactive content. In other embodiments, previously viewed media content that has been ranked may be displayed in interactive content based on a color gradient that corresponds with the ranking of the previously viewed content. In this manner, interactive listings for content that has been viewed more recently or that has been viewed more frequently may appear brighter or more intense than interactive listings for less recently or less frequently viewed content, or vice-versa. In still other embodiments, the viewing history for previously viewed media content, such as the date that the content was last viewed, or the number of the times that the content was viewed, may be displayed in the interactive content generated by the interactive media guidance application.

Media content may similarly be displayed based on rankings of previously viewed content. In some embodiments, advertisements or promotional media that were more recently or more frequently viewed than other available media content may be less likely to be displayed.

FIGS. 21A-F show illustrative content 2100 that may be generated and displayed by the interactive media guidance application based on a viewing history for an identified user, a selected device, or a home network in accordance with the present invention. In particular, FIGS. 21A-F show different illustrative visual indicators that may be used by the interactive media guidance application to represent displays and/or listings of previously viewed content. In FIGS. 21A-F, display screen 2100 may include selectable advertisement 2102, selectable pay-per-view ("PPV") advertisement 2104, picture-in-guide ("PIG") screen 2106, and program listings 2108, 2110, 2112 and 2114. Advertisements 2102 and 2104 may be referred to as selectable advertisements because the user can select the advertisements, and in response, the user may be provided with an opportunity to order the advertised product, may be automatically directed to the advertised show, etc.

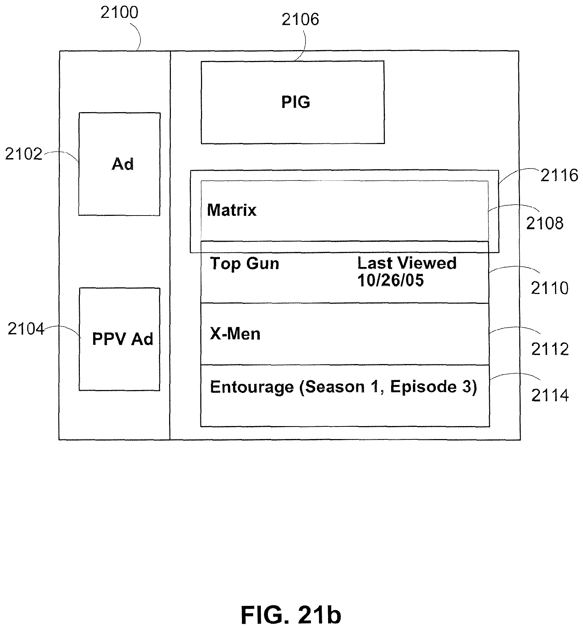

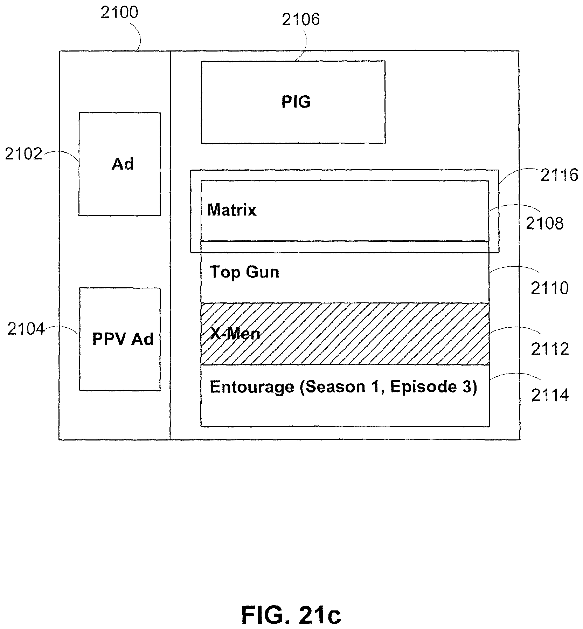

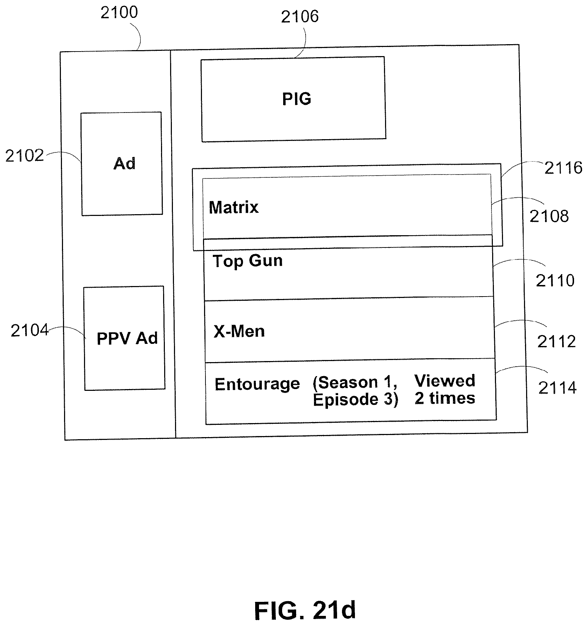

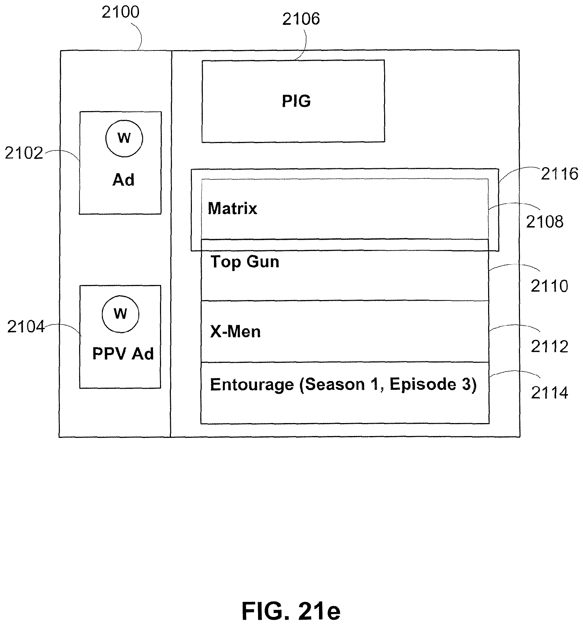

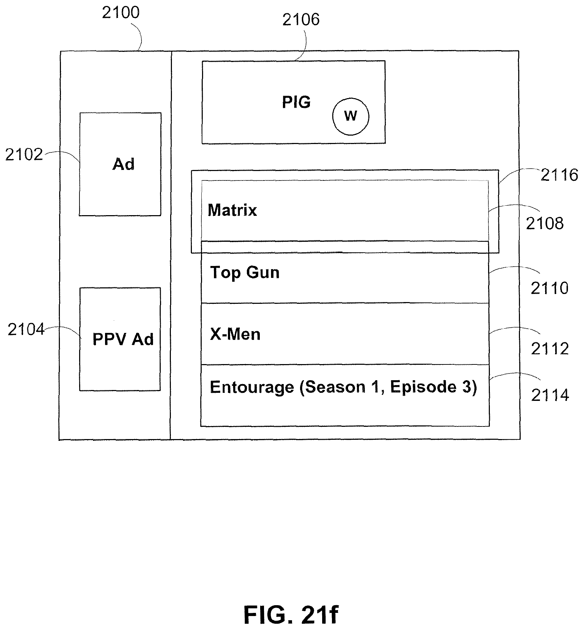

In FIG. 21A, program listing 2108 for the movie "Matrix" is displayed with a watched icon to indicate that the movie has been previously viewed. In FIG. 21B, program listing 2110 for the movie "Top Gun" is displayed with text indicating that the movie was last viewed on October 26, 2005. In FIG. 21C, program listing 2112 for the movie "X-Men" is shaded to denote that the movie has been previously viewed. As described above in connection with FIG. 20, the brightness or color of program listing 2112 may vary based on factors such as, for example, the date that the content corresponding to the program listing was last viewed, how often it was viewed, etc. In FIG. 21D, program listing 2114 for episode three from season one of the television series "Entourage" is displayed with textual information describing that the particular episode has been viewed two times. In FIG. 21E, selectable advertisement 2102 and selectable PPV advertisement 2104 may include visual indicators to denote that either the particular advertisement or the advertised content has been previously viewed. For example, as shown in FIG. 21E, selectable advertisements 2102 and 2104 may be displayed with the circle icon with the letter "W" to denote that either the particular advertisement, or the advertised content has been previously viewed. Different visual indicators may be used to distinguish for the viewer when advertisements themselves have been previously viewed from when the content being advertised has been viewed. In FIG. 21F, PIG screen 2106 may also display an indicator that content has been previously viewed when, for example, a user selects one of the program listings 2108, 2110, 2112, or 2114 or one of selectable advertisements 2102 or 2104 using highlight region 2118, and media content relating to the selected listing or advertisement is displayed in the PIG.

In some embodiments, the interactive media guidance application may display visual indicators to denote that content is "New to Me" instead of or in addition to displaying visual indicators to denote previously viewed content, as is shown in FIGS. 21A-F. As will be explained below in connection with FIG. 22, the decision to display visual indicators for unviewed versus viewed content may be set by the user. If this preference has not yet been specified by the user, the interactive media guidance application may by default (i.e., according to a default rule either chosen by the user or defined by the interactive media guidance system) display visual indicators in accordance with one of the above-described alternatives. If the interactive media guidance application is in fact configured to display visual indicators for previously unviewed content, visual indicators similar to those described above may be employed. For example, a rectangular icon with the word "New to Me", or a circular icon with the letters "NM" may be used to denote content that is new to the viewer, according to the particular user, device or household profile that has been loaded. Alternatively, the previously unviewed content (e.g., program listing, advertisement, or PIG screen content) may be shaded to indicate that it is new. The shading for previously unviewed content may be purposely set to be a different color or level of brightness from the shading for previously viewed content to make it easier for a user to distinguish the two types of content when, for example, the user desires to view different visual indicators for both unviewed and viewed content. Also, any combination of the visual indicators described above may be used to denote unviewed or viewed content. For example, the interactive media guidance application may apply shading to represent previously unviewed or viewed content within the program listing portion of a display screen, and then apply the circular icons to the advertisement, PIG or other areas of the display screen where previously unviewed or viewed content may be presented. The actual visual indicators that are to be employed for the different areas of a display may be specified either by the user or by the interactive media guidance system. Moreover, it will be generally understood that the visual indicators described in FIGS. 21A-F are only illustrative and not intended to be limiting, and that other forms of indicators appropriate for interactive media guidance applications may be used to represent unviewed or viewed content.

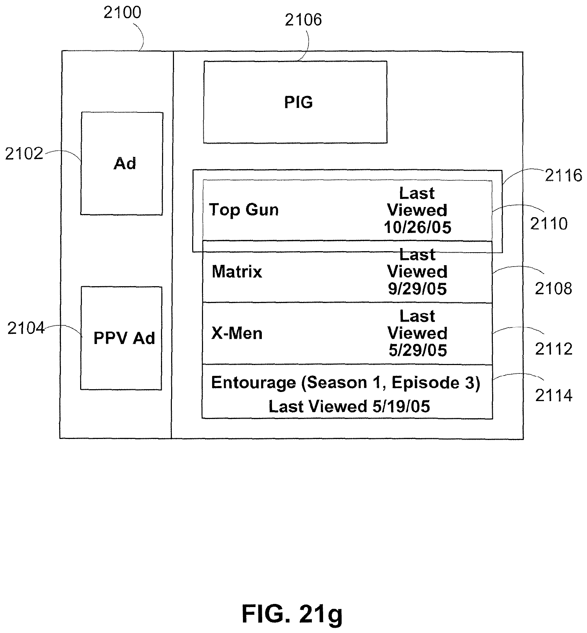

FIG. 21G shows an illustrative screen in which previously viewed content has been ranked according to predetermined criteria. Here, it will be assumed program listings 2108, 2110, 2112 and 2114 all correspond to previously viewed content, and are ranked according to the date that the content was last viewed. The interactive media guidance application may rank the most recently viewed program first, and thus display the most recently viewed program on the top of the display. Alternatively, the user may specify, or the interactive media guidance application may automatically set, a different order in which the previously viewed content should be ranked. Also, as discussed above, the ranking may be determined based on a weighted combination of criteria that again may be specified by the user or automatically set by the interactive media guidance application. Therefore, if, for example, program listings 2108, 2110, 2112 and 2114 were ranked on the basis of not only when the content represented in the listings was last viewed, but also how many times the content was viewed, it is entirely possible that program listing 2110 for "Top Gun" may not be the highest ranked program listing, and thus would not be displayed. Also, it will be understood that the indicators that are displayed in a ranked list do not necessarily have to correspond to the way in which the content is being ranked. For example, as will be explained below in connection with FIG. 22, the user may specify that visual indicators for identifying the frequency with which previously viewed content was viewed be used, and then separately specify that the criterion of when content was last viewed be used to rank such content.

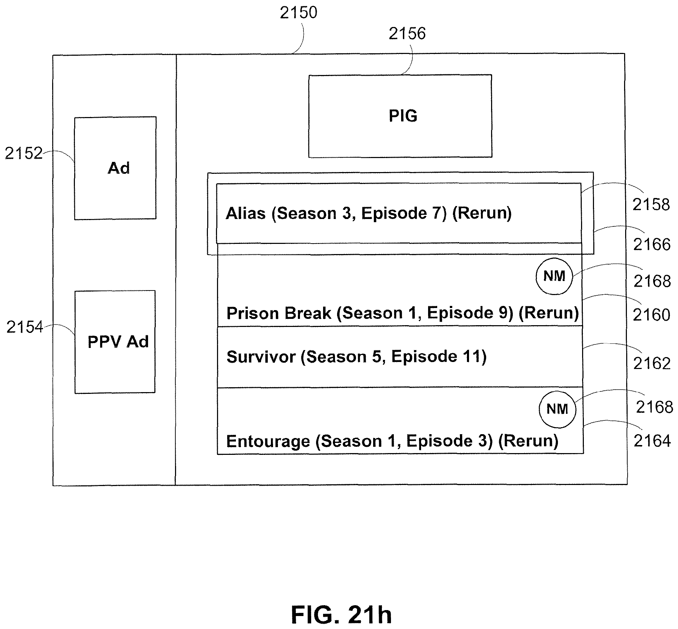

FIG. 21H illustrates the use of "New to Me" visual indicators to denote content that has been previously viewed, where the previously viewed content corresponds to reruns or repeats of television program episodes (i.e., episodes that have aired at least once in the past). FIG. 21H shows a display screen 2150 that may include selectable advertisement 2152, selectable PPV advertisement 2154 and PIG screen 2156. Display screen 2150 also includes program listings 2158, 2160, 2162 and 2164 that each correspond to an episode of a television series. Each of program listings 2158, 2160, 2162 and 2164 may be selected using highlight region 2166.

It is seen in FIG. 21H that program listings 2158, 2160, and 2164 are all indicated as being reruns. However, "New to Me" indicators 2168 are displayed only in connection with program listings 2160 and 2164, meaning that although the episodes identified by program listings 2160 and 2164 -- Season 1, Episode 9 of Prison Break and Season 1, Episode 3 of Entouragehave presumably aired before, depending on the profile that has been loaded, those reruns have not been previously viewed by the corresponding viewer, device or household.

This example emphasizes the usefulness of the "New to Me" feature applied to television shows that have been airing for a considerable amount of time, or that are otherwise in syndication. When a particular episode of a television program is a rerun, the listing of, or the detailed program schedule information for the episode typically indicates that the episode is a rerun, suggesting to a viewer that they have already watched the episode. However, viewers who have only begun to consistently watch the television program often have not seen many of the reruns. It is not until the viewers start watching more episodes of the program that the episodes that are flagged as reruns actually correspond to episodes that the viewer has seen. These repeat indicators are thus at least initially of little use to viewers who did not begin to watch a television series from the outset, when the program first started airing. Compounding this problem is the fact that repeat indicators can sometimes be inaccurate. By enabling users to maintain a viewing history for a viewer, device or household, then, the "New to Me" feature alleviates these problems by keeping track of the precise episodes of the programs that have been previously viewed.

FIG. 22 shows an illustrative menu screen 2200 that allows a user to activate, deactivate and configure the "New to Me" feature at will. In some embodiments, menu screen 2200 may be presented to a user, by default, immediately preceding or following the display of profile selection screen 1900 shown in FIG. 19. Menu screen 2200 may also be generally designed to be accessible at any time by pressing a corresponding "New to Me" function button on the remote control, or by selecting a "New to Me" function button displayed on any display screen generated by the interactive media guidance application. In particular, screen 2200 may include buttons 2202, 2204, 2206 and 2208. It is understood that the contents of screen 2200 are merely illustrative and that additional selectable features may be added, and that existing features may be omitted.

Button 2202 allows a user to run the "New to Me" feature on specific content. Thus, button 2202 may be selected when a user is interested in invoking the feature only on content for which the user believes that it worth identifying whether the content has been previously viewed. In response to selection of button 2202, the user may be presented with another screen for specifying the type or types of content that the user wishes to invoke the "New to Me" feature on. For example, the user may specify to invoke the feature only on advertisements, or on specific television programs, or on specific genres of movies. Any suitable type of display screen for entering in such information may be provided by the interactive media guidance application.

Button 2204 enables a.user to run the "New to Me" feature on specific functions or interactive content provided by the interactive media guidance application. In response to selection of button 2204, the interactive media guidance application provide one or more display screens in order to allow the user to select the type of functions or interactive content that the "New to Me" feature should impact. For example, the user may choose to turn on the "New to Me" feature only with respect to menu displays, program listing displays, recommendations, search results, automatic displays of advertisements or other content, any combination of these functions or interactive content, or any additional types of functions or interactive content supported by the interactive media guidance application for which the "New to Me" feature is applicable. The amount of user control may be even more refined in that a user may choose that, for each type of applicable function, a different "rule" be provided. The different available rules may include not displaying previously viewed content, displaying previously viewed or unviewed content using indicators, and displaying previously unviewed content according to a ranking. Where appropriate, these rules may be combined. For example, a user may opt to display previously viewed content using indicators and according to a ranking. Alternatively, selection of these rules may be applied globally across and independent of the different functions provided by the interactive media guidance application for which the "New to Me" function applies (e.g., by a button other than button 2204). The interactive media guidance application may also set a default rule that applies absent any selection of a rule by a user.

Button 2206 enables a user to activate the "New to Me" function on all the available types of content provided, and for every instance in which the "New to Me" function is applicable. In some embodiments, absent any specification by the user, the interactive media guidance application may run the "New to Me" function by default according to this nondiscretionary rule. In response to selection of button 2206, the interactive media guidance application may proceed to track the viewing history of all content for the specified user, device or household profile, and then use this information to update or modify the functions or interactive content provided based on this viewing history.

Button 2208 allows a user to configure additional options associated with the "New to Me" feature. For example, by selecting button 2208, the user may be presented with the opportunity via one or more display screens to, among other things, explicitly set the different types of visual indicators to be employed by the interactive media guidance application as described above in connection with FIGS. 21A-H, set default rules, etc.

Finally, button 2210 enables a user to voluntarily turn off the "New to Me" feature. In response to selection of button 2210, the interactive media guidance application may completely stop keeping track of the content viewed by the user.

The foregoing is merely illustrative of the principles of this invention and various modifications can be made by those skilled in the art without departing from the scope and spirit of the invention.

The following embodiments are disclosed:
1. A method for using an interactive media guidance application implemented on a user equipment device, comprising:
   providing a profile for use by the interactive media guidance application, wherein the profile comprises a viewing history of previously viewed content, and further wherein the profile is shared among a plurality of user equipment devices; and
   displaying interactive content using the interactive media guidance application based on the viewing history for the profile.
2. The method of item 1, further comprising receiving a user input for selecting the profile.
3. The method of item 1, further comprising automatically selecting the profile using the interactive media guidance application.
4. The method of item 1, wherein the interactive media guidance application automatically selects the profile after a predetermined time.
5. The method of item 4, wherein the predetermined time is set by a user, or is set by default by the interactive media guidance application.
6. The method of item 1, wherein the profile corresponds to a user profile comprising a viewing history of previously viewed content by a user associated with the user profile.
7. The method of item 1, wherein the profile corresponds to a device profile comprising a viewing history of previously viewed content on one of the user equipment devices.
8. The method of item 1, wherein the plurality of user equipment devices comprises a smaller plurality of user equipment devices that are located in a household, and further wherein the profile corresponds to a household profile comprising a viewing history of previously viewed content by the smaller plurality of user equipment devices located in the household.
9. The method of item 1, wherein the previously viewed content comprises programming, advertisements, content identified based on interactions by a user with the interactive media guidance application, or additional information.
10. The method of item 1, wherein displaying interactive content using the interactive media guidance application based on the viewing history for the profile comprises displaying a display of recommended content based on the viewing history for the profile.
11. The method of item 10, wherein the recommended content comprises advertisements, programming or additional information.
12. The method of item 1, wherein displaying interactive content using the interactive media guidance application based on the viewing history for the profile comprises displaying a display of results of a search for content based on the viewing history for the profile.
13. The method of item 1, wherein displaying interactive content using the interactive media guidance application based on the viewing history for the profile comprises displaying a display of program listings based on the viewing history for the profile.
14. The method of item 1, wherein displaying interactive content using the interactive media guidance application based on the viewing history for the profile comprises displaying an automatic display of content based on the viewing history for the profile.
15. The method of item 14, wherein the automatic display of content comprises advertisements, programming or additional information.
16. The method of item 1, wherein displaying interactive content using the interactive media guidance application based on the viewing history for the profile comprises displaying an interactive menu based on the viewing history for the profile.
17. The method of item 1, wherein displaying interactive content using the interactive media guidance application based on the viewing history for the profile comprises displaying a display comprising at least one indicator to denote previously viewed or unviewed content.
18. The method of item 17, wherein a user sets whether the indicator should denote previously viewed content, previously unviewed content, or both.
19. The method of item 17, wherein the interactive media guidance application sets by default whether the indicator should denote previously viewed content previously unviewed content, or both.
20. The method of item 17, wherein the display comprises a first indicator to denote previously viewed content, and a second indicator to denote previously unviewed content.
21. The method of item 17, wherein the indicator comprises an icon, or a shading of the previously viewed or unviewed content.
22. The method of item 17, wherein the indicator indicates the last time the previously viewed content was viewed, the number of times the previously viewed content was viewed, how often the previously viewed content was viewed, or how much of the previously viewed content was viewed.
23. The method of item 17, wherein the indicator is displayed with an advertisement in a panel display.
24. The method of item 17, wherein the indicator is displayed with an advertisement to denote that the advertisement has been previously viewed or not viewed.
25. The method of item 17, wherein the indicator is displayed with an advertisement for an advertised program to denote that the advertised program has been previously viewed or not viewed.
26. The method of item 17, wherein the indicator is displayed with a program listing for a particular program to denote that the particular program has been previously viewed or not viewed.
27. The method of item 17, wherein the indicator is displayed in a picture-in-guide display to denote that content displayed in the picture-in-guide display has been previously viewed or not viewed.
28. The method of item 27, wherein the content displayed in the picture-in-guide display corresponds to an advertisement, a preview for a program, or a program.
29. The method of item 1, wherein displaying interactive content using the interactive media guidance application based on the viewing history for the profile comprises displaying interactive content that does not include the previously viewed content.
30. The method of item 1, wherein displaying interactive content using the interactive media guidance application based on the viewing history for the profile comprises displaying previously viewed content according to a rank within a display of interactive content.
31. The method of item 1, wherein the viewing history of previously viewed content is defined by the interactive media guidance application.
32. The method of item 1, wherein the viewing history of at least a portion of the previously viewed content is defined by a user.
33. The method of item 32, wherein the user enters the viewing history of the portion of the previously viewed content on an Internet website or on a display generated by the interactive media guidance application.
34. The method of item 1, wherein displaying interactive content using the interactive media guidance application based on the viewing history for the profile comprises displaying a portion of the previously viewed content that has not yet been viewed.
35. The method of item 1, further comprising receiving a user input to display interactive content using the interactive media guidance application based on the viewing history for the profile.
36. The method of item 1, further comprising receiving a user input to display interactive content using the interactive media guidance application based only on a portion of the previously viewed content in the viewing history for the profile.
37. The method of item 1, further comprising receiving a user input to display interactive content using the interactive media guidance application for only a portion of the functionality provided by the interactive media guidance application based on the viewing history for the profile.
38. The method of item 1, further comprising receiving a user input to stop displaying interactive content using the interactive media guidance application based on the viewing history for the profile.
39. The method of item 1, wherein the interactive media guidance application is an interactive television program guide or an online television program guide.
40. A system that uses an interactive media guidance application, comprising:
   a plurality of user equipment devices connected by a network, wherein at least one of the plurality of user equipment devices is operative to:
      provide a profile for use by the interactive media guidance application, wherein the profile comprises a viewing history of previously viewed content, and further wherein the profile is shared among the plurality of user equipment devices; and
      display interactive content using the interactive media guidance application based on the viewing history for the profile.
41. The system of item 40, wherein at least one of the user equipment devices receives a user input for selecting the profile.
42. The system of item 40, wherein at least one of the plurality of user equipment devices automatically selects the profile.
43. The system of item 42, wherein the user equipment device selects the profile after a predetermined time.
44. The system of item 43, wherein the predetermined time is set by a user, or is set by default.
45. The system of item 40, wherein the profile corresponds to a user profile comprising a viewing history of previously viewed content by a user.
46. The system of item 40, wherein the profile corresponds to a device profile comprising a viewing history of previously viewed content on one of the user equipment devices.
47. The system of item 40, wherein the plurality of user equipment devices comprises a smaller plurality of user equipment devices that are located in a household, and further wherein the profile corresponds to a household profile comprising a viewing history of previously viewed content by the smaller plurality of user equipment devices located in the household.
48. The system of item 40, wherein the previously viewed content comprises programming, advertisements, content identified based on interactions by a user with at least one of the plurality of user equipment devices, or additional information.
49. The system of item 40, wherein the user equipment device is operative to display recommended content based on the viewing history for the profile.
50. The system of item 49, wherein the recommended content comprises advertisements, programming or additional information.
51. The system of item 40, wherein the user equipment device is operative to display results of a search for content based on the viewing history for the profile.
52. The system of item 40, wherein the user equipment device is operative to display program listings based on the viewing history for the profile.
53. The system of item 40, wherein the user equipment device is operative to display content based on the viewing history for the profile.
54. The system of item 53, wherein the automatic display of content comprises advertisements, programming or additional information.
55. The system of item 40, wherein the user equipment device is operative to display an interactive menu based on the viewing history for the profile.
56. The system of item 40, wherein the user equipment device is operative to display at least one indicator to denote previously viewed or unviewed content.
57. The system of item 56, wherein a user sets whether the indicator should denote previously viewed content, previously unviewed content, or both.
58. The system of item 56, wherein the user equipment device sets by default whether the indicator should denote previously viewed content previously unviewed content, or both.
59. The system of item 56, wherein the display comprises a first indicator to denote previously viewed content, and a second indicator to denote previously unviewed content.
60. The system of item 56, wherein the indicator comprises an icon, or a shading of the previously viewed or unviewed content.
61. The system of item 56, wherein the indicator indicates the last time the previously viewed content was viewed, the number of times the previously viewed content was viewed, how often the previously viewed content was viewed, or how much of the previously viewed content was viewed.
62. The system of item 56, wherein the indicator is displayed with an advertisement in a panel display.
63. The system of item 56, wherein the indicator is displayed with an advertisement to denote that the advertisement has been previously viewed or not viewed.
64. The system of item 56, wherein the indicator is displayed with an advertisement for an advertised program to denote that the advertised program has been previously viewed or not viewed.
65. The system of item 56, wherein the indicator is displayed with a program listing for a particular program to denote that the particular program has been previously viewed or not viewed.
66. The system of item 56, wherein the indicator is displayed in a picture-in-guide display to denote that content displayed in the picture-in-guide display has been previously viewed or not viewed.
67. The system of item 66, wherein the content displayed in the picture-in-guide display corresponds to an advertisement, a preview for a program, or a program.
68. The system of item 40, wherein the user equipment device is operative to display interactive content that does not include the previously viewed content.
69. The system of item 40, wherein the user equipment device is operative to display previously viewed content according to a rank within a display of interactive content.
70. The system of item 40, wherein the viewing history of previously viewed content is defined by the interactive media guidance application.
71. The system of item 40, wherein the viewing history of at least a portion of the previously viewed content is defined by a user on at least one of the plurality of user equipment devices.
72. The system of item 71, wherein the user enters the viewing history of the portion of the previously viewed content on an Internet website or on a display generated by the interactive media guidance application.
73. The system of item 40, wherein the user equipment is operative to display a portion of the previously viewed content that has not yet been viewed.
74. The system of item 40, wherein at least one of the plurality of user equipment devices receives a user input to display interactive content based on the viewing history.
75. The system of item 40, wherein at least one of the plurality of user equipment devices receives a user input to display interactive content based only on a portion of the previously viewed content in the viewing history.
76. The system of item 40, wherein at least one of the plurality of user equipment devices receives a user input to display interactive content for only a portion of the functionality based on the viewing history.
77. The system of item 40, wherein at least one of the plurality of user equipment devices receives a user input to stop display of interactive content based on the viewing history.
78. The system of item 40, wherein the interactive media guidance application is an interactive television program guide or an online television program guide.
79. A method for using an interactive media guidance application, comprising:
   providing a plurality of user equipment devices each capable of supporting an interactive media guidance application and that are communicatively coupled to each other via a home network;
   determining the identity of a user using one of the.user devices;
   providing a viewing history of the identified user, the viewing history including monitored interactions by the identified user on all of the user devices; and
   generating interactive content based on the viewing history of the identified user for display using any user device communicatively coupled to the home network.
80. The method of item 79, further comprising displaying the generated interactive content on a display screen of a first one of the user devices for the identified user.
81. The method of item 79, further comprising displaying the generated interactive content on a display screen of a second one of the user devices for the identified user.
82. The method of item 79, wherein the determining comprises using an identification system to determine the identity of the identified user.
83. The method of item 79, wherein the determining comprises receiving a user input command that indicates the identity of the identified user.
84. The method of item 79, wherein the determining comprises selecting a default identity for the user.
85. The method of item 79, further comprising:
   selecting a user profile for the identified user.
86. The method of item 85, wherein the selected user profile comprises the viewer history for the identified user.
87. The method of item 79, further comprising:
   monitoring interactions performed by the identified user on all of the user devices; and
   updating the viewer history for the identified user based on the monitored interactions.
88. The method of item 79, wherein the generated interactive content is accessible by each of the user devices.
89. The method of item 79, wherein the viewer history is accessible by each of the user devices.
90. The method of item 79, further comprising:
   storing the viewer history on a database.
91. The method of item 90, wherein the database is located locally on one of the user devices.
92. The method of item 90, wherein the database is a home network database that is communicatively coupled to the home network.
93. The method of item 90, wherein the database is a remote database that is communicatively coupled to the home network.
94. The method of item 93, wherein the remote database is located on a server or a distribution facility.
95. The method of item 79, wherein the viewing history comprises data that indicates which programming has been viewed by the identified user, data that monitors the identified user's interactions with the interactive media guidance application, data that indicates which advertisements have been viewed or selected by the identified user, or data that indicates which additional information has been viewed or selected by the identified user.
96. The method of item 79, wherein the generated interactive content comprises a list of programming that has not been viewed by the identified user, advertisements that have not been viewed by the identified user, additional information that has not been viewed by the identified user, additional information that informs the identified user whether a particular program has been viewed, additional information that informs the identified user the last time a particular program was viewed, or a list of programming that has been ranked according to predetermined criteria.
97. The method of item 79, wherein the generated interactive content comprises a listing of programming, the method further comprising:
   storing in a database an identifier associated with each program that has been viewed by the identified user; and
   cross-referencing identifiers associated with all available programming with the identifiers stored in the database to determine which programming can be included in the listing of programming.
98. The method of item 79, wherein the generated interactive content comprises a listing of programming, the method further comprising:
   providing a group of identifiers corresponding to all programming available that can be viewed for the identified user, wherein the listing of programming is derived from the group of identifiers; and
   removing from the group identifiers corresponding to programming that has been viewed by the identified user.
99. The method of item 98, further comprising:
   adding new identifiers to the group as new programming becomes available; and
   deleting identifiers from the group when programming corresponding to the deleted identifiers is no longer available.
100. The method of item 79, wherein the identified user is a first user and the generated interactive content is first user generated interactive content, the method further comprising:
   determining that a second user is using one of the user devices; and
   generating second user interactive content based on a viewing history for the second user for display on a display screen of any user device communicatively coupled to the home network.
101. The method of item 79, wherein the interactive media guidance application is an interactive television program guide or an online television program guide.
102. A system for using an interactive media guidance application, comprising:
   a plurality of user equipment devices communicatively coupled to each other via a home network, wherein at least one user equipment device is operative to:
      determine the identity of a user;
      provide a viewing history of the identified user, the viewing history including monitored interactions by the identified user on the plurality of user equipment devices; and
      generate interactive content based on the viewing history of the identified user for display.
103. The system of item 102, wherein any one of the user equipment devices is operative to display the generated interactive content for the identified user.
104. The system of item 102, wherein the at least one user equipment device is operative to display the generated interactive content for the identified user.
105. The system of item 102, wherein the at least one user equipment device is operative to determine the identity of the identified user using an identification system.
106. The system of item, 102, wherein the at least one user equipment device is operative to receive a user input command that indicates the identity of the identified user.
107. The system of item 102, wherein the at least one user equipment device is operative to select a default identity for the user.
108. The system of item 102, wherein the at least one user equipment device is operative to:
   select a user profile for the identified user.
109. The system of item 108, wherein the selected user profile comprises the viewer history for the identified user.
110. The system of item 102, wherein the at least one user equipment device is operative to:
   monitor interactions performed by the identified user on all of the user devices; and
   update the viewer history for the identified user based on the monitored interactions.
111. The system of item 102, wherein the generated interactive content is accessible by each of the user equipment devices.
112. The system of item 102, wherein the viewer history is accessible by each of the user equipment devices.
113. The system of item 102, wherein the at least one user equipment device is operative to:
   store the viewer history on a database.
114. The system of item 113, wherein the database is located locally on one of the user equipment devices.
115. The system of item 113, wherein the database is a home network database that is communicatively coupled to the home network.
116. The system of item 113, wherein the database is a remote database that is communicatively coupled to the home network.
117. The system of item 116, wherein the remote database is located on a server or a distribution facility.
118. The system of item 102, wherein the viewing history comprises data that indicates which programming has been viewed by the identified user, data that monitors the identified user's interactions with the user equipment devices, data that indicates which advertisements have been viewed or selected by the identified user, or data that indicates which additional information has been viewed or selected by the identified user.
119. The system of item 102, wherein the generated interactive content comprises a list of programming that has not been viewed by the identified user, advertisements that have not been viewed by the identified user, additional information that has not been viewed by the identified user, additional information that informs the identified user whether a particular program has been viewed, additional information that informs the identified user the last time a particular program was viewed, or a list of programming that has been ranked according to predetermined criteria.
120. The system of item 102, wherein the generated interactive content comprises a listing of programming, wherein the at least one user equipment device is operative to:
   store in a database an identifier associated with each program that has been viewed by the identified user; and
   cross-reference identifiers associated with all available programming with the identifiers stored in the database to determine which programming can be included in the listing of programming.
121. The system of item 102, wherein the generated interactive content comprises a listing of programming, wherein the at least one user equipment device is operative to:
   provide a group of identifiers corresponding to all programming available that can be viewed for the identified user, wherein the listing of programming is derived from the group of identifiers; and
   remove from the group identifiers corresponding to programming that has been viewed by the identified user.
122. The system of item 121, wherein the at least one user equipment device is operative to:
   add new identifiers to the group as new programming becomes available; and
   delete identifiers from the group when programming corresponding to the deleted identifiers is no longer available.
123. The system of item 102, wherein the identified user is a first user and the generated interactive content is first user generated interactive content, wherein the at least one user equipment device is operative to:
   determine that a second user is using one of the user devices; and
   generate second user interactive content based on a viewing history for the second user for display on a display screen of any user device communicatively coupled to the network.
124. The system of item 102, wherein the interactive media guidance application is an interactive television program guide or an online television program guide.
125. A method for using an interactive media guidance application, comprising:
   providing a plurality of user equipment devices each capable of supporting an interactive media guidance application and that are communicatively coupled to each other via a home network;
   providing a viewing history of a selected one of the user devices, the viewing history including monitored interactions that occurred at the selected user device; and
   generating interactive content based on the viewing history of the selected user device for display on all of the user devices communicatively coupled to the home network.
126. The method of item 125, wherein the selected user device is a master device and all remaining user devices are slave devices that display generated interactive content based on the viewing history of the master device.
127. The method of item 125, further comprising displaying the generated interactive content on a display screen of any user device communicatively coupled to the home network.
128. The method of item 125, further comprising:
   enabling a user to select which user device is the selected device.
129. The method of item 125, further comprising:
   selecting a device profile for the selected device.
130. The method of item 129, wherein the selected user profile comprises the viewer history for the selected device.
131. The method of item 125, further comprising:
   monitoring interactions performed on the selected user device; and
   updating the viewer history for the selected device based on the monitored interactions.
132. The method of item 125, wherein the generated interactive content is accessible by each of the user devices.
133. The method of item 125, wherein the viewer history is accessible by each of the user devices.
134. The method of item 125, further comprising:
   storing the viewer history on a database.
135. The method of item 134, wherein the database is located locally on one of the user devices.
136. The method of item 134, wherein the database is a home network database that is communicatively coupled to the home network.
137. The method of item 134, wherein the database is a remote database that is communicatively coupled to the home networks.
138. The method of item 137, wherein the remote database is located on a server or a distribution facility.
139. The method of item 125, wherein the viewing history comprises data that indicates which programming has been viewed on the selected user device, data that monitors interactions with the interactive media guidance application on the selected user device, data that indicates which advertisements have been displayed on a display screen of the selected user device, or data that indicates which additional information has been displayed on a display screen of the selected user device.
140. The method of item 125, wherein the generated interactive content comprises a list of programming that includes programming that has not been displayed on a display screen of the selected user device, advertisements that have not been displayed on a display screen of the selected user device, additional information that has not been displayed on a display screen of the selected user device, additional information that indicates whether a particular program has been viewed, additional information that indicates the last time a particular program was viewed, or a list of programming that has been ranked according to predetermined criteria.
141. The method of item 125, wherein the generated interactive content comprises a listing of programming, the method further comprising:
   storing in a database an identifier associated with each program that has been viewed by the selected user device; and
   cross-referencing identifiers associated with all available programming with the identifiers stored in the database to determine which programming can be included in the listing of programming.
142. The method of item 125, wherein the generated interactive content comprises a listing of programming, the method further comprising:
   providing a group of identifiers corresponding to all programming available that can be viewed on any of the user devices communicatively coupled to the home network, wherein the listing of programming is derived from the group of identifiers; and
   removing from the group identifiers corresponding to programming that has been viewed on the selected user device.
143. The method of item 142, further comprising:
   adding new identifiers to the group as new programming becomes available; and
   deleting identifiers from the group when programming corresponding to the deleted identifiers is no longer available.
144. The method of item 125, wherein the interactive media guidance application is an interactive television program guide or an online television program guide.
145. A system for using an interactive media guidance application, comprising:
   a plurality of user equipment devices communicatively coupled to each other via a home network, wherein the system is operative to:
      provide a viewing history of a selected one of the plurality of user equipment devices, the viewing history including monitored interactions that occurred at the selected user equipment device; and
      generate interactive content based on the viewing history of the selected user equipment device for display.
146. The system of item 145, wherein the selected user device is a master device and all remaining user devices are slave devices that display generated interactive content based on the viewing history of the master device.
147. The system of item 145, wherein the at least one user equipment device is operative to display the generated interactive content.
148. The system of item 145, wherein the system is operative to:
   enable a user to select which user device is the selected device.
149. The system of item 145, wherein the system is operative to:
   select a device profile for the selected device.
150. The system of item 149, wherein the selected user profile comprises the viewer history for the selected device.
151. The system of item 145, wherein the system is operative to:
   monitor interactions performed on the selected user device; and
   update the viewer history for the selected device based on the monitored interactions.
152. The system of item 145, wherein the generated interactive content is accessible by each of the user devices.
153. The system of item 145, wherein the viewer history is accessible by each of the user devices.
154. The system of item 145, wherein the system is operative to:
   store the viewer history on a database.
155. The system of item 154, wherein the database is located locally on one of the user devices.
156. The system of item 154, wherein the database is a network database that is communicatively coupled to the network.
157. The system of item 154, wherein the database is a remote database that is communicatively coupled to the network.
158. The system of item 157, wherein the remote database is located on a server or a distribution facility.
159. The system of item 145, wherein the viewing history comprises data that indicates which programming has been viewed on the selected user device, data that monitors interactions on the selected user device, data that indicates which advertisements have been displayed by the selected user device, or data that indicates which additional information has been displayed by the selected user device.
160. The system of item 145, wherein the generated interactive content comprises a list of programming that includes programming that has not been displayed by the selected user device, advertisements that have not been displayed by the selected user device, additional information that has not been displayed by the selected user device, additional information that indicates whether a particular program has been viewed, additional information that indicates the last time a particular program was viewed, or a list of programming that has been ranked according to predetermined criteria.
161. The system of item 145, wherein the generated interactive content comprises a listing of programming, wherein the system is operative to:
   store in a database an identifier associated with each program that has been viewed by the selected user device; and
   cross-reference identifiers associated with all available programming with the identifiers stored in the database to determine which programming can be included in the listing of programming.
162. The system of item 145, wherein the generated interactive content comprises a listing of programming, wherein the system is operative to:
   provide a group of identifiers corresponding to all programming available that can be viewed on any of the user devices communicatively coupled to the network, wherein the listing of programming is derived from the group of identifiers; and
   remove from the group identifiers corresponding to programming that has been viewed on the selected user device.
163. The system of item 162, wherein the system is operative to:
   add new identifiers to the group as new programming becomes available; and
   delete identifiers from the group when programming corresponding to the deleted identifiers is no longer available.
164. The system of item 145, wherein the interactive media guidance application is an interactive television program guide or an online television program guide.
165. A method for using an interactive media guidance application, comprising:
   providing at least two home networks that are communicatively coupled to each other, each home network comprising at least one user equipment device capable of supporting an interactive media guidance application;
   providing a viewing history for at least a first of the home networks, the viewing history including monitored interactions that occurred at the first home network; and
   generating interactive content based on the viewing history for the first home network.
166. The method of item 165, further comprising:
   displaying the generated interactive content on a display device of at least one user device of at least one of the home networks.
167. The method of item 165, further comprising:
   displaying the generated interactive content on at least one display device of a second of the home networks.
168. The method of item 165, further comprising:
   displaying the generated interactive content on at least one display device of the first of the home networks.
169. The method of item 165, wherein the generated interactive content is accessible by each of the home networks.
170. The method of item 165, wherein the viewing history of the first of the home networks is accessible by each of the home networks.
171. The method of item 165, further comprising:
   providing a home profile, wherein the home profile comprises the viewer history for at least the first of the home networks.
172. The method of item 165, further comprising:
   monitoring interactions performed on the first of the home networks; and
   updating the viewer history for at least the first of the home networks based on the monitored interactions.
173. The method of item 165, wherein the viewer history is associated with the first of the home networks and a second of the home networks, the method further comprising:
   monitoring interactions performed on a second of the home networks; and
   updating the viewer history for the first and second of the home networks.
174. The method of item 165, further comprising:
   storing the viewer history on a database.
175. The method of item 174, wherein the database is located locally on a user device that is communicatively coupled to one of the home networks.
176. The method of item 174, wherein the database is a home network database that is communicatively coupled to one of the home networks.
177. The method of item 174, wherein the database is a remote database that is communicatively coupled to each of the home networks.
178. The method of item 177, wherein the remote database is located on a server or a distribution facility.
179. The method of item 165, wherein the viewing history comprises data that indicates which programming has been viewed on the first of the home networks, data that monitors interactions with the interactive media guidance application on the first of the home networks, data that indicates which advertisements have been displayed on the first of the home networks, or data that indicates which additional information has been displayed on the first of the home networks.
180. The method of item 165, wherein the generated interactive content comprises a list of programming that includes programming that has not been displayed on the first of the home networks, advertisements that have not been displayed on the first of the home networks, additional information that has not been displayed on the first of the home networks, additional information that indicates whether a particular program has been viewed, additional information that indicates the last time a particular program was viewed, or a list of programming that has been ranked according to predetermined criteria.
181. The method of item 165, wherein the generated interactive content comprises a listing of programming, the method further comprising:
   storing in a database an identifier associated with each program that has been viewed on the first of the home networks; and
   cross-referencing identifiers associated with all available programming with the identifiers stored in the database to determine which programming can be included in the listing of programming.
182. The method of item 165, wherein the generated interactive content comprises a listing of programming, the method further comprising:
   providing a group of identifiers corresponding to all programming available that can be viewed at any of the home networks, wherein the listing of programming is derived from the group of identifiers; and
   removing from the group identifiers corresponding to programming that has been viewed on the first of the home networks.
183. The method of item 182, further comprising:
   adding new identifiers to the group as new programming becomes available; and
   deleting identifiers from the group when programming corresponding to the deleted identifiers is no longer available.
184. The method of item 165, wherein the interactive media guidance application is an interactive television program guide or an online television program guide.
185. A system for using an interactive media guidance application, comprising:
   at least two home networks that are communicatively coupled to each other, each home network comprising at least one user equipment device, wherein the system is operative to:
      provide a viewing history for at least a first of the home networks, the viewing history including monitored interactions that occurred at the first home network; and
      generate interactive content based on the viewing history for the first home network.
186. The system of item 185, wherein the system is operative to:
   display the generated interactive content on a display device of at least one user equipment device of at least one of the home networks.
187. The system of item 185, wherein the system is operative to:
   display the generated interactive content on at least one display device of a second of the home networks.
188. The system of item 185, wherein the system is operative to:
   display the generated interactive content on at least one display device of the first of the home networks.
189. The system of item 185, wherein the generated interactive content is accessible by each of the home networks.
190. The system of item 185, wherein the viewing history of the first of the home networks is accessible by each of the home networks.
191. The system of item 185, wherein the system is operative to:
   provide a home profile, wherein the home profile comprises the viewer history for at least the first of the home networks.
192. The system of item 185, wherein the system is operative to:
   monitor interactions performed on the first of the home networks; and
   update the viewer history for at least the first of the home networks based on the monitored interactions.
193. The system of item 185, wherein the viewer history is associated with the first of the home networks and a second of the home networks, wherein the system is operative to:
   monitor interactions performed on a second of the home networks; and
   update the viewer history for the first and second of the home networks.
194. The system of item 185, wherein the system is operative to:
   store the viewer history on a database.
195. The system of item 194, wherein the database is located locally on a user device that is communicatively coupled to one of the home networks.
196. The system of item 194, wherein the database is a home network database that is communicatively coupled to one of the home networks.
197. The system of item 194, wherein the database is a remote database that is communicatively coupled to each of the home networks.
198. The system of item 197, wherein the remote database is located on a server or a distribution facility.
199. The system of item 185, wherein the viewing history comprises data that indicates which programming has been viewed on the first of the home networks, data that monitors interactions with the user equipment device on the first of the home networks, data that indicates which advertisements have been displayed by the first of the home networks, or data that indicates which additional information has been displayed by the first of the home networks.
200. The system of item 185, wherein the generated interactive content comprises a list of programming that includes programming that has not been displayed by the first of the home networks, advertisements that have not been displayed by the first of the home networks, additional information that has not been displayed by the first of the home networks, additional information that indicates whether a particular program has been viewed, additional information that indicates the last time a particular program was viewed, or a list of programming that has been ranked according to predetermined criteria.
201. The system of item 185, wherein the generated interactive content comprises a listing of programming, wherein the system is operative to:
   store in a database an identifier associated with each program that has been viewed on the first of the home networks; and
   cross-reference identifiers associated with all available programming with the identifiers stored in the database to determine which programming can be included in the listing of programming.
202. The system of item 185, wherein the generated interactive content comprises a listing of programming, wherein the system is operative to:
   provide a group of identifiers corresponding to all programming available that can be viewed at any of the home networks, wherein the listing of programming is derived from the group of identifiers; and
   remove from the group identifiers corresponding to programming that has been viewed on the first of the home networks.
203. The system of item 202, wherein the system is operative to:
   add new identifiers to the group as new programming becomes available; and
   delete identifiers from the group when programming corresponding to the deleted identifiers is no longer available.
204. The system of item 185, wherein the interactive media guidance application is an interactive television program guide or an online television program guide.
205. A method for creating a viewing history using an interactive media guidance application, comprising:
   creating a viewing history for a user based on previously viewed content;
   automatically updating the viewing history based on content that is viewed by the user on a user equipment device; and
   allowing the user to manually update the viewing history using the interactive media guidance application.
206. The method of item 205, wherein the user equipment device is a first user equipment device, the method further comprising automatically updating the viewing history based on content that is viewed by the user on a second user equipment device.
207. The method of item 206, wherein the second user equipment device is part of a home network, the home network comprises a plurality of user equipment devices, including the first user equipment device.
208. The method of item 206, wherein the second user equipment device is not part of a home network, the home network comprises a plurality of user equipment devices, including the first user equipment device.
209. The method of item 205, wherein allowing the user to manually update the viewing history through the interactive media guidance application comprises:
   receiving a first user input for specifying previously viewed content; and
   receiving a second user input for selecting a user profile, wherein the user profile comprises the viewing history for the user based on the previously viewed content.
210. The method of item 209, further comprising:
   updating the viewing history of the selected user profile with the specified content.
211. The method of item, 209, wherein receiving a first user input for specifying previously viewed content comprises:
   allowing a user to perform a search for the previously viewed content; and
   receiving a user input of the previously viewed content based on the search.
212. The method of item 209, wherein receiving a first user input for specifying previously viewed content further comprises receiving a user input for specifying details of the viewing of the previously viewed content.
213. The method of item 209, wherein receiving a second user input for selecting a profile comprises:
   allowing a user to perform a search for the profile; and
   receiving a user input of the profile based on the search.
214. The method of item 209, further comprising receiving a user input for creating a profile.
215. The method of item 210, wherein updating the viewing history of the selected profile with the specified content comprises adding the specified content to the viewing history of the selected profile, or replacing the viewing history of the selected profile with the specified content.
216. The method of item 209, further comprising receiving a user input to begin displaying interactive content using the interactive media guidance application for only a portion of the functionality provided by the interactive media guidance application based on the specified content.
217. The method of item. 209, wherein the specified content and the selected profile are provided on a website, and further wherein the interactive media guidance application receives the specified content and the selected profile from the website to perform the updating.
218. The method of item 209, wherein the specified content and the selected profile are provided to the interactive media guidance application.
219. The method of item 205, wherein the interactive media guidance application is an interactive television program guide, or an online television program guide.
220. The method of item 205, wherein the previously viewed content comprises programming, advertisements, content identified based on interactions by a user with the interactive media guidance application, or additional information.
221. The method of item 205, wherein the viewing history makes up a portion of a user profile for the user.
222. The method of item 221, wherein the user profile is stored in a single database that is accessible by at least one of a plurality of user equipment devices that are part of a home network, wherein the plurality of user equipment devices in the home network includes the user equipment device, and further wherein the plurality of user equipment devices in the home network are communicatively coupled to one another.
223. The method of item 222, wherein the single database is located in a local server within the home network.
224. The method of item 223, wherein the local server is a standalone local server.
225. The method of item 222, wherein the single database is located in a remote server outside of the home network.
226. The method of item 222, wherein the single database is located in one of the plurality of user equipment devices in the home network, or in another user equipment device outside of the home network.
227. The method of item 222, wherein authorization is required to access the single database, the user profile, or the viewing history portion of the user profile.
228. The method of item 222, wherein a first user equipment device in the home network accesses the viewing history stored in the single database by establishing a communicative link with at least a second user equipment device that has direct access to the single database.
229. The method of item 221, wherein the user profile is stored in a single database that is accessible by the user equipment device.
230. The method of item 221, wherein the user profile is duplicated and stored in a plurality of databases, at least one of which is accessible by at least one of a plurality of user equipment devices that are part of a home network, and wherein the plurality of user equipment devices in the home network includes the user equipment device.
231. The method of item 230, wherein the plurality of databases are located at any of the locations from the group consisting of a local server within the home network, a remote server outside of the home network, and at least one of the plurality of user equipment devices in the home network.
232. The method of item 231, wherein the user profile, including the viewing history, is stored in a plurality of databases, at least one of which is accessible by at least one of a plurality of user equipment devices that are part of a home network, and wherein the plurality of user equipment devices in the home network includes the user equipment device.
233. The method of item 232, wherein the plurality of databases are located at any of the locations from the group consisting of a local server within the home network, a remote server outside of the home network, and at least one of the plurality of user equipment devices in the home network.
234. A system for creating a viewing history using an interactive media guidance application, the system comprising a user equipment device operative to:
   create a viewing history for a user based on previously viewed content;
   automatically update the viewing history based on content that is viewed by the user on the user equipment device; and
   allow the user to manually update the viewing history.
235. The system of item 234, wherein the viewing history is automatically updated based on content that is viewed by the user on a second user equipment device.
236. The system of item 235, wherein the second user equipment device is part of a home network, wherein the home network comprises a plurality of user equipment devices that includes the user equipment device.
237. The system of item 235, wherein the second user equipment device is outside of a home network, wherein the home network comprises a plurality of user equipment devices that includes the user equipment device.
238. The system of item 234, wherein the user equipment device is operative to:
   receive a first user input for specifying previously viewed content; and
   receive a second user input for selecting a user profile, wherein the user profile comprises the viewing history for the user based on the previously viewed content.
239. The system of item 238, wherein the user equipment is operative to:
   update the viewing history of the selected user profile with the specified content.
240. The system of item 234, wherein the user equipment device is operative to:
   allow a user to perform a search for the previously viewed content; and
   receive a user input of the previously viewed content based on the search.
241. The system of item 234, wherein the user equipment device is operative to receive a user input for specifying details of the viewing of the previously viewed content.
242. The system of item 234, wherein the user equipment device is operative to:
   allow a user to perform a search for a profile; and
   receive a user input to select a profile based on the search.
243. The system of item 234, wherein the user equipment device is operative to receive a user input for creating a profile.
244. The system of item 239, wherein the user equipment device is operative to add the specified content to the viewing history of the selected profile, or to replace the viewing history of the selected profile with the specified content.
245. The system of item 239, wherein the user equipment device is operative to receive a user input to begin displaying interactive content for only a portion of the functionality based on the specified content.
246. The system of item 238, wherein the specified content and the selected profile are provided on a website, and further wherein the user equipment device is operative to receive the specified content and the selected profile from the website to perform the update.
247. The system of item 238, wherein the specified content and the selected profile are provided to the interactive media guidance application.
248. The system of item 234, wherein the interactive media guidance application is an interactive television program guide, or an online television program guide.
249. The system of item 234, wherein the previously viewed content comprises programming, advertisements, content identified based on interactions by a user with the user equipment, or additional information.
250. The system of item 234, wherein the viewing history makes up a portion of a user profile for the user.
251. The system of item 250, wherein the user profile is stored in a single database that is accessible by at least one of a plurality of user equipment devices that are part of a home network, wherein the plurality of user equipment devices in the home network includes the user equipment device, and further wherein the plurality of user equipment devices in the home network are communicatively coupled to one another.
252. The system of item 251, wherein the single database is located in a local server within the home network.
253. The system of item 252, wherein the local server is a standalone local server.
254. The system of item 251, wherein the single database is located in a remote server outside of the home network.
255. The system of item 251, wherein the single database is located in one of the plurality of user equipment devices in the home network, or in another user equipment device outside of the home network.
256. The system of item 251, wherein authorization is required to access the single database, the user profile, or the viewing history portion of the user profile.
257. The system of item 251, wherein a first user equipment device in the home network accesses the viewing history stored in the single database by establishing a communicative link with at least a second user equipment device that has direct access to the single database.
258. The system of item 250, wherein the user profile is stored in a single database that is accessible by the user equipment device.
259. The system of item 250, wherein the user profile is duplicated and stored in a plurality of databases, at least one of which is accessible by at least one of a plurality of user equipment devices that are part of a home network, and wherein the plurality of user equipment devices in the home network includes the user equipment device.
260. The system of item 259, wherein the plurality of databases are located at any of the locations from the group consisting of a local server within the home network, a remote server outside of the home network, and at least one of the plurality of user equipment devices in the home network.
261. The system of item 260, wherein the user profile, including the viewing history, is stored in a plurality of databases, at least one of which is accessible by at least one of a plurality of user equipment devices that are part of a home network, and wherein the plurality of user equipment devices in the home network includes the user equipment device.
262. The system of item 261, wherein the plurality of databases are located at any of the locations from the group consisting of a local server within the home network, a remote server outside of the home network, and at least one of the plurality of user equipment devices in the home network.
263. A method for displaying a list of previously viewed content in an interactive media guidance application implemented on a user equipment device, comprising:
   ranking previously viewed content according to at least one predetermined criterion; and
   displaying interactive content using the interactive media guidance application based on the ranking.
264. The method of item 263, wherein the predetermined criterion is specified by a user.
265. The method of item 263, wherein a user specifies an order in which the previously viewed content is ranked.
266. The method of item 263, wherein the predetermined criterion comprises the last time the previously viewed content was viewed, the number of times the previously viewed content was viewed, how often the previously viewed content was viewed, or how much of the previously viewed content was viewed.
267. The method of item 263, further comprising ranking previously viewed content according to a plurality of predetermined criteria, wherein the predetermined criteria are combined according to a weighting.
268. The method of item 267, wherein the weighting is specified by a user.
269. The method of item 263, wherein the previously viewed content comprises programming, advertisements, content identified based on interactions by a user with the interactive media guidance application, or additional information.
270. A system for creating a viewing history using an interactive media guidance application, the system comprising a user equipment device operative to:
   rank previously viewed content according to at least one predetermined criterion; and
   display interactive content based on the ranking.
271. The system of item 270, wherein the predetermined criterion is specified by a user.
272. The system of item 270, wherein a user specifies an order in which the previously viewed content is ranked.
273. The system of item 270, wherein the predetermined criterion comprises the last time the previously viewed content was viewed, the number of times the previously viewed content was viewed, how often the previously viewed content was viewed, or how much of the previously viewed content was viewed.
274. The system of item 270, wherein the user equipment device is operative to rank previously viewed content according to a plurality of predetermined criteria, wherein the predetermined criteria are combined according to a weighting.
275. The system of item 274, wherein the weighting is specified by a user.
276. The system of item 270, wherein the previously viewed content comprises programming, advertisements, content identified based on interactions with the user equipment device, or additional information.
277. A method for displaying a list of programming in an interactive media guidance application, the method comprising:
   providing a plurality of user equipment devices capable of supporting an interactive media guidance application and that are communicatively coupled to each other via a home network;
   assigning a timestamp to each program that has been viewed on at least one of the user devices;
   ranking programming according to predetermined criteria to determine the order in which the programming is displayed in a ranked list of programming, the predetermined criteria comprising the timestamp; and
   displaying the ranked list of programming using at least one of the user devices.
278. The method of item 277, wherein the ranking comprises placing previously viewed programs in the list according to their timestamps.
279. The method of item 277, wherein the ranking comprises placing programs having timestamps that are more recent lower in the list of programming than programs having timestamps that are less recent and programs that do not have an assigned timestamp.
280. The method of item 277, wherein the ranking comprises placing the most recently viewed program at the bottom of the list of programming.
281. The method of item 277, wherein the list of programming includes programming that has been viewed and programming that has not been viewed.
282. The method of item 277, wherein the list of programming includes only programming that has not been viewed.
283. The method of item 277, wherein the displayed list of programming is a list available for display on any one of the user devices based on a viewing history for an identified user.
284. The method of item 277, wherein the displayed list of programming is based on a viewing history for a selected one of the plurality of user devices.
285. The method of item 277, wherein the displayed list of programming is based on a viewing history for at least one home network.
286. The method of item 277, further comprising:
   displaying additional information for a particular program displayed in the list of programming.
287. The method of item 286, wherein the additional information comprises an indicator that indicates that the particular program has been previously viewed.
288. The method of item 287, wherein the indicator comprises an icon or a change in an appearance of the particular program.
289. The method of item 286, wherein the additional information comprises the timestamp associated with the particular program.
290. The method of item 277, wherein programs that are ranked lower may be colored different than higher ranked programs.
291. A system for using an interactive media guidance application, comprising:
   a plurality of user equipment devices connected by a network, wherein the system is operative to:
      assign a timestamp to each program that has been viewed on the user equipment device;
      rank programming according to predetermined criteria to determine the order in which the programming is displayed in a ranked list of programming, the predetermined criteria comprising the timestamp; and
      display the ranked list of programming.
292. The system of item 291, wherein the system is operative to place previously viewed programs in the list according to their timestamps.
293. The system of item 291, wherein the system is operative to place programs having timestamps that are more recent lower in the list of programming than programs having timestamps that are less recent and programs that do not have an assigned timestamp.
294. The system of item 291, wherein the system is operative to place the most recently viewed program at the bottom of the list of programming.
295. The system of item 291, wherein the list of programming includes programming that has been viewed and programming that has not been viewed.
296. The system of item 291, wherein the list of programming includes only programming that has not been viewed.
297. The system of item 291, wherein the displayed list of programming is a list available for display on any one of the user devices based on a viewing history for an identified user.
298. The system of item 291, wherein the displayed list of programming is based on a viewing history for a selected one of the plurality of user devices.
299. The system of item 291, wherein the displayed list of programming is based on a viewing history for at least one home network.
300. The system of item 291, wherein the system is operative to:
   display additional information for a particular program displayed in the list of programming.
301. The system of item 300, wherein the additional information comprises an indicator that indicates that the particular program has been previously viewed.
302. The system of item 301, wherein the indicator comprises an icon or a change in an appearance of the particular program.
303. The system of item 300, wherein the additional information comprises the timestamp associated with the particular program.
304. The system of item 291, wherein programs that are ranked lower may be colored different than higher ranked programs.

## Claims

1. A method for using an interactive media guidance application implemented on a user equipment device, **characterised by**:
providing a profile for use by the interactive media guidance application, wherein the profile comprises a viewing history of previously viewed content, and further wherein the profile is shared among a plurality of user equipment devices;
designating content as viewed content when at least a predetermined portion of the content has been viewed; and
displaying interactive content using the interactive media guidance application based on the viewing history for the profile, wherein the displayed interactive content comprises at least one displayed indicator to distinguish previously viewed from unviewed content.

2. The method of claim 1, wherein designating the program as viewed content comprises:
determining whether a majority of the content has been viewed; and
based on determining that the majority of the content has been viewed, designating the content as viewed content.

3. The method of claim 1, wherein the predetermined portion of the content dependent on a type of the content.

4. The method of claim 3, wherein the predetermined portion of the content is less than half of the content when the type of the content is video on-demand.

5. The method of any of the preceding claims, further comprising defining a threshold for determining whether previously viewed content should be displayed in the displayed interactive content.

6. The method of claim 5, wherein defining the threshold comprises receiving a user instruction via the interactive media guidance application.

7. The method of claim 5 or 6, wherein the threshold is a specified date, when displaying the interactive content, previously viewed content is not removed from the interactive content unless the previously viewed content was viewed before the specified date.

8. The method of claim 5 or 6, wherein the threshold is range of dates, when displaying the interactive content, previously viewed content is not removed from the interactive content unless the previously viewed content was viewed within s range of dates.

9. The method of claim 5 or 6, wherein, when displaying the interactive content, previously viewed content is not removed from the interactive content unless the previously viewed content was viewed at least a specified number times.

10. A system for using an interactive media guidance application implemented on a user equipment device, **characterised by**:
means for providing a profile for use by the interactive media guidance application, wherein the profile comprises a viewing history of previously viewed content, and further wherein the profile is shared among a plurality of user equipment devices;
means for designating content as viewed content when a predetermined portion of the content has been viewed; and
means for displaying interactive content using the interactive media guidance application based on the viewing history for the profile, wherein the displayed interactive content comprises at least one displayed indicator to distinguish previously viewed from unviewed content.

11. The system of claim 10, wherein said means for designating the program as viewed content is configured to:
determine whether a majority of the content has been viewed; and
designate the content as viewed content if it is determined that the majority of the content has been viewed.

12. The system of claim 10, wherein the predetermined portion of the content is dependent on a type of the content.

13. The system of claim 12, wherein the predetermined portion of the content is less than half of the content when the type of the content is video on-demand.

14. The system of any of claims 10-13, further comprising means for defining a threshold for determining whether previously viewed content should be displayed in the displayed interactive content.

15. The system of claim 14, wherein, when said means for displaying the interactive content is configured to not remove previously viewed content from the interactive content unless the previously viewed content was viewed at least a specified number times.
